# EUROPÄISCHE PATENTSCHRIFT

(11) **EP 0 710 519 B1**
(45) Veröffentlichungstag und Bekanntmachung des Hinweises auf die Patenterteilung: **17.01.2001**
(21) Anmeldenummer: 95105380.0
(22) Anmeldetag: 10.04.1995
(51) Int. Cl.: B23B 31/12

(54) **Bohrfutter**
Drill chuck
Mandrin porte-foret

(30) Priorität: 31.10.1994 DE 4438991
(43) Veröffentlichungstag der Anmeldung: 08.05.1996
(73) Patentinhaber: Röhm, Günter Horst, D-89567 Sontheim (DE)
(72) Erfinder: Röhm, Günter Horst, D-89567 Sontheim (DE)
(74) Vertreter: Fay, Hermann, Dipl.-Phys. Dr.

(56) Entgegenhaltungen:
- EP-A- 0 017 748
- DE-A- 2 341 642

## Beschreibung

Die Erfindung betrifft ein Bohrfutter, insbesondere zum Schlagbohren, mit einem an eine Bohrspindel anschließbaren Futterkörper, mit im Futterkörper geführten, zwischen sich eine Aufnahme für das Bohrwerkzeug bildenden Spannbacken, die zum Öffnen und Schließen des Bohrfutters über eine Verzahnung mit dem Spanngewinde eines am Futterkörper drehbar und axial unverschiebbar geführten Spannrings im Eingriff stehen, zu dessen Betätigung eine koaxiale, ebenfalls axial unverschiebbare Spannhülse vorgesehen ist, ferner mit einer Sperreinrichtung für den Spannring, bestehend aus einem koaxialen Kranz von Sperrausnehmungen und aus mindestens einem Sperrglied, das unter Federkraft in die Sperrausnehmungen eingerückt ist, wobei das Sperrglied und die Sperrausnehmung einander in derart geneigten Flankenflächen anliegen, daß diese den Spannring in der dem Öffnen des Bohrfutters entsprechenden Drehrichtung gegen Verdrehen sperren, beim Verdrehen des Spannrings in der entgegen gesetzten, also dem Schließen des Bohrfutters entsprechenden Drehrichtung aber das Sperrglied gegen die Federkraft aus den Sperrausnehmungen herausdrücken und dadurch von Sperrausnehmung zu Sperrausnehmung verrutschen lassen, und wobei das Sperrglied zwischen dem an den Sperrausnehmungen eingerückten Zustand und einem aus den Sperrausnehmungen ausgerückten Zustand verstellbar ist.

Bohrfutter dieser Art sind aus DE 43 13 742 C1 bekannt. Bei diesen bekannten Bohrfuttern sind der Spannring und die Spannhülse unverdrehbar miteinander verbunden und die Sperreinrichtung ist zwischen der Spannhülse und dem Futterkörper wirksam. Zur Verstellung des Sperrglieds in den an den Sperrausnehmungen eingerückten Zustand ist ein am Futterkörper drehbar geführter, koaxialer Stellring vorgesehen. Zum Spannen oder Lösen des Bohrfutters bedarf es der Betätigung sowohl der Spannhülse als auch des Stellrings, also der Handhabung des Bohrfutters mit zwei Händen.

Der Erfindung liegt die Aufgabe zugrunde, ein Bohrfutter der eingangs genannten Art so auszubilden, daß es zum Spannen und Lösen einfacher, nämlich nur an einem einzigen Teil und damit mit nur einer einzigen Hand, betätigt werden kann.

Diese Aufgabe wird bei einem Bohrfutter mit den eingangs genannten Merkmalen erfindungsgemäß dadurch gelöst, daß die Spannhülse relativ zum Spannring verdrehbar ist und Anschläge vorgesehen sind, welche die Verdrehung der Spannhülse relativ zum Spannring in beiden Drehrichtungen begrenzen, daß die Sperreinrichtung zwischen dem Spannring und dem Futterkörper ausgebildet und das Sperrglied durch Verdrehen der Spannhülse relativ zum Spannring zwischen dem an den Sperrausnehmungen eingerückten Zustand und dem ausgerückten Zustand verstellbar ist, wobei durch Verdrehen der Spannhülse in der dem Schließen des Bohrfutters entsprechenden Drehrichtung das Sperrglied sich aus dem ausgerückten Zustand in den eingerückten Zustand verstellt und umgekehrt, daß weiter zwischen der Spannhülse und dem Spannring eine Rasteinrichtung vorhanden ist, die in Umfangsrichtung zwei Raststellungen aufweist, wobei sich in der einen Raststellung das Sperrglied in dem an den Sperrausnehmungen eingerückten Zustand und in der anderen Raststellung im ausgerückten Zustand befindet, und daß die Spannhülse den Spannring umschließt und in axialer Richtung über seine gesamte Länge abdeckt und im Bereich axial vor dem Spanngewinde nur am Spannring geführt ist. - Dabei bedeuten hier wie im folgenden die Richtungsangaben axial vorn in Richtung zum Werkzeug, axial hinten in Richtung zur Bohrspindel hin.

Bei dem erfindungsgemäßen Bohrfutter dient die Spannhülse sowohl zur Verstellung des Sperrglieds als auch zur spannenden und lösenden Verstellung der Spannbacken, wobei ersteres entlang dem Drehweg erfolgt, um den die Spannhülse gegenüber dem Spannring zwischen den Anschlägen verdrehbar ist. Die Rasteinrichtung hat dabei den Zweck, selbsttätige und ungewünschte Drehungen der Spannhülse gegenüber dem Spannring zu verhindern, insbes. sicherzustellen, daß bei offenem Bohrfutter der Spannring von der Spannhülse beim Verdrehen mitgenommen wird, ohne daß das Sperrglied in den eingerückten Zustand verstellt wird, bzw. bei gespanntem Bohrfutter sich die Spannhülse gegenüber dem Spannring nicht so verdrehen kann, daß das Sperrglied in den ausgerückten Zustand übergeht. Da die Spannhülse den Spannring vollständig überdeckt, ist zur Betätigung des erfindungsgemäßen Bohrfutters allein Spannhülse zugänglich, die nur verdreht zu werden braucht, um das Bohrfutter zu schließen, zu spannen und zu sperren, bzw. zu entsperren, zu lösen und zu öffnen, was die Handhabung im Vergleich zu den bekannten Bohrfuttern wesentlich vereinfacht, vor allem dann, wenn das Spannen und Lösen des Bohrfutters mit Hilfe des Bohrmaschinenantriebs über die Bohrspindel erfolgen soll und dabei nur eine Hand zum Halten der Spannhülse frei ist. Da die Spannhülse im Bereich axial vor dem Spanngewinde nur am Spannring geführt ist, wird die axiale Baulänge des Bohrfutters nicht vergrößert, wie es durch den sonst bei bekannten Bohrfuttern zur Verstellung des Sperrglieds erforderlichen, axial neben dem Spannring am Futterkörper zu lagernden Stellring der Fall ist. Außerdem steht die Spannhülse nicht axial nach vorn über den Spannring vor, was die Gefahr verringert, daß beim Bohren, etwa in einer Wand, das Bohrfutter beim Durchbohren mit der Spannhülse an der Wand zur Anlage kommt und die Spannhülse gebremst wird, was leicht dazu führt, daß sich das Bohrfutter so fest zuzieht, daß es nur noch mit Mühe und Aufwand wieder gelöst werden kann.

In einer besonders bevorzugten Ausführungsform der Erfindung weist der Spannring einen eine Führung für die Spannhülse bildenden koaxialen Zwischenring auf, der die spannringseitigen Teile der Anschläge für die Spannhülse, der Sperreinrichtung und der Rasteinrichtung trägt und ein Kragenteil umfaßt, das den das Spanngewinde tragenden Teil des Spannrings drehfest umschließt. Dabei kann auf sehr einfache Weise die an sich bekannte, aus herstellungs- und montagetechnischen Gründen besonders vorteilhafte Möglichkeit verwirklicht werden, daß der das Spanngewinde tragende Teil des Spannrings aus zwei Ringhälften besteht, die durch das Kragenteil am Futterkörper zusammengehalten sind.

Vorzugsweise besitzt der Zwischenring zur radialen Führung der Spannhülse eine rotationssymmetrische Außenfläche, der die Spannhülse mit einer entsprechend rotationssymmetrischen Innenfläche anliegt. Dabei empfiehlt es sich aus herstellungs- und montagetechnischen Gründen, die Anordnung vorzugsweise so zu treffen, daß die rotationssymmetrische Innenfläche der Spannhülse im gesamten axialen Bereich zwischen ihrem rückwärtigen Hülsenende und dem Spannring einen lichten Innendurchmesser besitzt, der mindestens gleich ist ihrem Innendurchmesser am Spannring, und daß die in axialer Richtung ungeteilt ausgebildete Spannhülse axial von vorn her über den Futterkörper auf den am Futterkörper fertig montierten Spannring aufgeschoben und in ihrer aufgeschobenen Endlage axial gesichert ist. Der Zwischenring kann dabei auch zu einer axialen Führung der Spannhülse dienen, wozu zweckmäßigerweise der Zwischenring eine kreisringförmige Außenschulter aufweist, der die Spannhülse zur axialen Abstützung nach hinten mit einer entsprechend kreisringförmigen Innenschulter anliegt. Im übrigen kann die Spannhülse außer am Spannring selbstverständlich auch im Bereich axial hinter dem Spanngewinde geführt sein, soweit dies sich als erforderlich oder wünschenswert erweist. Insbesondere besteht die Möglichkeit, daß die Spannhülse im Bereich axial hinter dem Spannring durch einen mit dem Futterkörper verbundenen Abschlußring geführt ist. Der Abschlußring kann drehfest am Futterkörper befestigt und als Haltering zum Festhalten des Futterkörpers von Hand ausgebildet sein, wenn etwa der Wunsch besteht, den Futterkörper auch unabhängig von der Bohrspindel mit der einen Hand manipulieren zu können, während die andere Hand die Spannhülse betätigt. Die Spannhülse kann weiter am Abschlußring außer radial geführt auch gegen Verschiebungen axial nach vorn und/oder hinten gesichert sein, auch besteht die Möglichkeit, daß zwischen der Spannhülse und dem Futterkörper ein mit beiden axial im Anschlag stehender Sprengring vorgesehen ist, der die Spannhülse gegen Verschieben axial nach vorn und/oder hinten sichert.

Um die Spannhülse noch sicherer vor dem Anschlagen an der zu bohrenden Wand und das Bohrfutter vor dem damit verbundenen Festziehen zu schützen, empfiehlt es sich, daß axial vor der Spannhülse ein ihr gegenüber frei verdrehbarer Anschlagring vorgesehen ist, der am Futterkörper axial unverschiebbar und drehbar gelagert ist. Für einen solchen Anschlagring besteht beim erfindungsgemäßen Bohrfutter am vorderen Teil des Futterkörpers ausreichend Platz, da dieser Teil erfindungsgemäß nicht zur Lagerung und Führung der Spannhülse benötigt wird. Außerdem verhindert der Anschlagring, daß von vorn her starke axiale Belastungen auf die Spannhülse ausgeübt werden können, was die Sicherung der Spannhülse gegen axiale Verschiebungen erleichtert und vereinfacht.

Auch ist eine sehr zweckmäßige Ausführungsform des erfindungsgemäßen Bohrfutters dadurch gekennzeichnet, daß die Spannhülse in radialer Richtung zweiwandig aus einer inneren Kunststoffhülse und einer äußeren Mantelhülse aus festerem Werkstoff, insbesondere Stahl, zusammengesetzt ist und beide Hülsen relativ zueinander gegen Verdrehen gesichert sind.

Eine weitere, sehr vorteilhafte Ausführungsform des erfindungsgemäßen Bohrfutters ist dadurch gekennzeichnet, daß für die Anschläge zwischen der Spannhülse und dem Zwischenring mindestens ein Anschlagstück am einen Teil, d. h. Zwischenring oder Spannhülse, und eine das Anschlagstück aufnehmende Aussparung am anderen Teil vorgesehen sind, wobei das Anschlagstück an den Enden des Drehwegs jeweils mit einer der die Aussparung in Umfangsrichtung begrenzenden beiden Stirnflächen zum Anschlag kommt. Im einzelnen kann das Anschlagstück als Wandstück des Zwischenrings ausgebildet sein, das vom vorderen Rand des Zwischenrings axial nach vorn in die auf der Wandinnenseite der Spannhülse ausgebildete Aussparung vorsteht. Eine besonders vorteilhafte Weiterbildung dieser Ausführungsform ist dadurch gekennzeichnet, daß das Anschlagstück die Aussparung axial bis zum vorderen Rand der Spannhülse durchgreift sowie an seinem vorderen Ende für die Spannhülse einen axialen Anschlag bildet, der die Spannhülse gegen Verschieben axial nach vorn sichert. Eine andere, montagetechnisch besonders zweckmäßige Ausführungsform ist dadurch gekennzeichnet, daß das Anschlagstück als radial einwärts gerichteter Nocken an der Wandinnenseite der Spannhülse und die Aussparung als Fenster in einem sich axial nach vorn etwa konisch verjüngenden Kragen des Zwischenrings ausgebildet ist, und daß der Nocken eine radial federnde Rastnase aufweist, die bei auf den Zwischenring vollständig aufgeschobener Spannhülse hiner dem axial vorderen Rand des Fensters einrastet und dadurch die Spannhülse gegen Verschieben axial nach vorn sichert. Im Ergebnis ist es mit Hilfe des Anschlagstücks in Verbindung mit der schon erwähnten kreisringförmigen Außenschulter des Zwischenrings möglich, die Spannhülse gegen axiales Verschieben in beiden Richtungen am Zwischenring zu sichern, sie also allein am Zwischenring radial wie axial zu führen.

Eine bezüglich der Steuerung des Sperrglieds besonders einfache und daher bevorzugte Bauform des Bohrfutters ist dadurch gekennzeichnet, daß der Kranz der Sperrausnehmungen am Futterkörper und das Sperrglied am Zwischenring angeordnet sind, und daß zur Steuerung des Sperrglieds an der Spannhülse eine Steuerkurve ausgebildet ist.

Das Sperrglied ist vorzugsweise an einem sich in Umfangsrichtung erstreckenden Federarm des Zwischenrings ausgebildet, wobei der Federarm im eingerückten Zustand des Sperrglieds der Steuerkurve in einem Abstand vom Sperrglied anliegt, der das Durchfedern des Federarms an der Stelle des Sperrglieds um dessen Eingriffstiefe in die Sperrausnehmungen ermöglicht.

Hinsichtlich der Rasteinrichtung ist eine bevorzugte Ausführungsform des erfindungsgemäßen Bohrfutters dadurch gekennzeichnet, daß die Rasteinrichtung von in den Raststellungen miteinander zum Eingriff kommenden Rastelementen, d. h. Rastvorsprung oder Rastaufnahme, am Zwischenring und an der Spannhülse gebildet ist, und daß der Zwischenring mindestens einen sich in Umfangsrichtung erstreckenden Federsteg trägt, an dem sich mindestens eines der Rastelemente befindet.

Der Federsteg und der Federarm können aus der Wand des Zwischenrings freigeschnitten sein. Eine andere sehr vorteilhafte Ausführungsform ist dadurch gekennzeichnet, daß der Federsteg und der Federarm von einem zwischen dem Futterkörper und der Spannhülse angeordneten, sich in Umfangsrichtung erstreckenden und drehschlüssig mit dem Zwischenring verbundenen Federband gebildet sind, an dem zwei in Umfangsrichtung in gegenseitigem Abstand befindliche Vorsprünge vorgesehen sind, von denen der sperrgliedseitige Vorsprung die Anlage des Federarms an der Steuerkurve, der andere Vorsprung den Rastvorsprung der Rasteinrichtung bildet, deren Rastaufnahmen an der Spannhülse ausgebildet sind. Dabei kann in bevorzugter Ausführungsform das Sperrglied unmittelbar durch das rückwärtige Ende des Federbandes gebildet sein, gesehen in der dem Schließen des Bohrfutters entsprechenden Drehrichtung der Spannhülse. Im einzelnen besteht die besonders vorteilhafte Möglichkeit, daß das Federband bei zur Futterachse paralleler Ausrichtung seiner Bandfläche in den Zwischenring mit auswärts gerichteter Vorspannung eingelegt ist, mit seinen Vorsprüngen den Zwischenring in Fenstern nach außen durchgreift, wodurch das Federband gegen Verdrehen am Zwischenring gesichert ist, und daß das Federband in Umfangsrichtung zwischen seinen Vorsprüngen einen dritten, den Zwischenring in einem weiteren Fenster nach außen durchgreifenden Vorsprung aufweist, der in eine auf der Wandinnenseite der Spannhülse vorgesehene Nut greift, die sich in Umfangsrichtung mindestens über den maximal möglichen Verdrehungsweg der Spannhülse gegenüber dem Zwischenring erstreckt und mit mindestens einer ihrer Seitenwände eine axiale Anlage für den Vorsprung bildet, wodurch eine weitere Möglichkeit geschaffen wird, die Spannhülse gegen Axialverschiebung am Zwischenring zu sichern. Dann liegen diese Sicherung, der Sperreingriff des Sperrglieds in die Sperrausnehmungen und der Rasteingriff des Rastvorsprungs in die Rastaufnahmen sämtlich in derselben, zur Futterachse senkrechten Ebene, was eine völlig symmetrische, Kippmomente vermeidende Beanspruchung der beteiligten Teile ergibt. Diese Vorteile können dadurch noch weiter ausgebildet werden, daß der mittlere Vorsprung mit den benachbarten Vorsprüngen durch je einen eigenen Federsteg verbunden ist, und daß der den Rastvorsprung bildende Vorsprung auf seiner dem mittleren Vorsprung abgewandten Seite einen dem Kranz der Sperrausnehmungen unter Vorspannung anliegenden Federschenkel trägt. Die Federstege und der Federschenkel ergeben gemeinsam eine sehr präzise Ausrichtung des Federbandes am Zwischenring in Bezug auf den Kranz der Sperrausnehmungen einerseits und auf die Rastaufnahmen andererseits und damit sehr genaue Werte für die Federkräfte, mit denen das Federband das Sperrglied im Sperreingriff und den Rastvorsprung im Rasteingriff hält.

Soweit es im übrigen um die Sicherung der Spannhülse gegen axiales Verschieben geht, kann anstelle des mittleren Vorsprungs des Federbandes oder auch ergänzend zu ihm die Anordnung so getroffen werden, daß der Zwischenring an einer in Umfangsrichtung zwischen den Vorsprüngen und gegenüber dem Federband liegenden Stelle eine vom Federband unabhängige Federspange aufweist, die radial nach außen in eine auf der Wandinnenseite der Spannhülse vorgesehene Nut greift, die sich in Umfangsrichtung mindestens über den maximal möglichen Verdrehungsweg der Spannhülse gegenüber dem Zwischenring erstreckt und mit mindestens einer ihrer Seitenwände eine axiale Anlage für die Federspange bildet, durch welche die Spannhülse gegen Axialverschiebung am Zwischenring gesichert ist.

Im folgenden wird die Erfindung an in der Zeichnung dargestellten Ausführungsbeispielen näher erläutert; es zeigen:
- Fig. 1: ein Bohrfutter nach der Erfindung, links in einem Axialschnitt, rechts in einer Seitenansicht, jeweils in der Stellung der Spannbacken bei geringstem Spanndurchmesser und im ungesperrten Futterzustand,
- Fig. 2: den Schnitt II - II in Fig. 1,
- Fig. 3: den Schnitt III - III in Fig. 1,
- Fig. 4: den Schnitt IV - IV in Fig. 1, und zwar in der Teilfig. 4.1 im ungesperrten, in der Teilfig. 4.2 im gesperrten Futterzustand,
- Fig. 5: eine andere Ausführungsform des erfindungsgemäßen Bohrfutters in einer der Fig. 1 entsprechenden Darstellung,
- Fig. 6: den Schnitt VI - VI in Fig. 5,
- Fig. 7: eine weitere Ausführungsform des erfindungsgemäßen Bohrfutters in einer der Fig. 1 entsprechenden Darstellung,
- Fig. 8: den Schnitt VIII - VIII in Fig. 7,
- Fig. 9: eine nochmals andere Ausführungsform des Bohrfutters nach der Erfindung in einer der Fig. 1 entsprechenden Darstellung,
- Fig. 10: den Schnitt X - X in Fig. 9,
- Fig. 11: den Schnitt XI - XI in Fig. 9,
- Fig. 12: das in Fig. 9 mit XII bezeichnete Detail in vergrößerter Darstellung,
- Fig. 13 bis 16: verschiedene Ausführungsformen des erfindungsgemäßen Bohrfutters, jeweils in einer der Fig. 1 entsprechenden Darstellung,
- Fig. 17: den Schnitt XVII - XVII in Fig. 16,
- Fig. 18: eine weitere Ausführungsform des Bohrfutters nach der Erfindung,
- Fig. 19: eine nochmals andere weitere Ausführungsform des erfindungsgemäßen Bohrfutters,
- Fig. 20: den Schnitt XX - XX in Fig. 19,
- Fig. 21: den Schnitt XXI - XXI in Fig. 19, und zwar in der Teilfig. 21.1 im ungesperrten, in der Teilfig. 21.2 im gesperrten Futterzustand,
- Fig. 22: eine weitere Ausführungsform des erfindungsgemäßen Bohrfutters in einer der Fig. 1 entsprechenden Darstellung,
- Fig. 23: den Schnitt XXIII - XXIII in Fig. 22, und zwar in der Teilfig. 23.1 im ungesperrten, in der Teilfig. 23.2 im gesperrten Futterzustand,
- Fig. 24: eine wiederum andere Ausführungsform des Bohrfutters nach der Erfindung in einer der Fig. 1 entsprechenden Darstellung,
- Fig. 25: den Schnitt XXV - XXV in Fig. 24,
- Fig. 26: den Schnitt XXVI - XXVI in Fig. 24 in einer Abwicklung in Umfangsrichtung, und zwar in der Teilfig. 26.1 im ungesperrten, in der Teilfig. 26.2 im gesperrten Futterzustand,
- Fig. 27: nur den Zwischenring des Bohrfutters nach Fig. 24 im Axialschnitt und
- Fig. 28: eine Draufsicht auf den Zwischenring der Fig. 27.

Die in der Zeichnung dargestellten Bohrfutter dienen zur Aufnahme eines nicht dargestellten Bohrers und besitzen je einen Futterkörper 1 zum Anschluß an eine ebenfalls nicht dargestellte Bohrspindel. Zum Anschluß der Bohrspindel besitzt der Futterkörper 1 eine Gewindeaufnahme 2, an die sich nach vorne ein ebenfalls nicht dargestellter axialer Durchgang anschließen kann, durch den hindurch die Schläge eines in der hohlen Drehspindel verschiebbar geführten Schlägers oder Döppers unmittelbar auf das Schaftende des in der Werkzeugaufnahme 4 des Bohrfutters gehaltenen Bohrers übertragen werden können. Die Bohrfutter besitzen den Bohrer zentrierende, axial führende und/oder einspannende Spannbacken 5, die in der zur Futterachse 3 koaxialen Werkzeugaufnahme 4 zentrisch zur Futterachse verstellbar sind. Die Spannbacken 5 greifen mit einer Verzahnung 6 in ein Spanngewinde 7 eines Spannrings 8, der am Futterkörper 1 axial unverschiebbar und drehbar geführt ist und zum Spannen und Lösen des Futters mit Hilfe einer ebenfalls axial unverschiebbaren Spannhülse 9 von Hand relativ zum Futterkörper 1 verdreht werden kann. Um unerwünschte Verstellungen der Spannbacken 5 zu verhindern, kann die Drehstellung des Spannrings 8 fixiert werden. Dazu dient eine allgemein mit 11 bezeichnete und zwischen dem Spannring 8 und dem Futterkörper 1 ausgebildete Sperreinrichtung, die aus einem koaxialen Kranz von Sperrausnehmungen 10 an der äußeren Umfangsfläche des Futterkörpers 1 (oder eines undrehbar auf ihm befestigten Ringes) und aus mindestens einem Sperrglied 12 besteht, das unter Federkraft im wesentlichen radial von außen nach innen in die Sperrausnehmungen 10 greift. Dabei liegen das Sperrglied 12 und die es aufnehmenden Sperrausnehmungen 10 einander in derart geneigten Flankenflächen 13', 13'' an, daß diese den Spannring 8 in der dem Öffnen des Bohrfutters entsprechenden Drehrichtung (Pfeil 14) gegen Verdrehen verriegeln, beim Verdrehen des Spannrings 8 von Hand mit einem dazu ausreichend großen Drehmoment in der entgegen gesetzten, also dem Schließen des Bohrfutters entsprechenden Drehrichtung (Pfeil 15) das Sperrglied 12 aber gegen die Federkraft aus den Sperrausnehmungen 10 herausdrücken und von Sperrausnehmung zu Sperrausnehmung entlang dem Umfang des Futterkörpers 1 verrutschen lassen.

Unter den im Bohrbetrieb auftretenden Schwingungsbeanspruchungen des Bohrfutters bleibt das Futter aber auch in dieser dem Pfeil 15 entsprechenden Drehrichtung gesperrt. Die hierfür unterschiedliche Neigung der Flankenflächen 13', 13'' wird auf einfache Weise durch eine sägezahnförmige Gestaltung erreicht, wobei die steilere Flankenfläche 13' der Zahnbrust und die flachere Flankenfläche 13'' dem Zahnrücken entspricht. Das Sperrglied 12 kann zwischen seinen an den Sperrausnehmungen 10 ein- und ausgerückten Zuständen verstellt werden, wozu das Sperrglied 12 durch eine Steuerkurve 25 an der Spannhülse 9 verstellbar und entsprechend die Spannhülse 9 relativ zum Spannring 8 verdrehbar ist. Diese Verdrehung der Spannhülse 9 relativ zum Spannring 8 ist in beiden Drehrichtungen (Pfeile 14, 15) formschlüssig begrenzt, wozu erste Anschläge 16', 16'' vorgesehen sind. Durch Verdrehen der Spannhülse 9 in der dem Schließen des Bohrfutters entsprechenden Drehrichtung (Pfeil 15) verstellt sich das Sperrglied 12 aus dem ausgerückten Zustand in den eingerückten Zustand und umgekehrt, also durch Verdrehen der Spannhülse 9 in der dem Öffnen des Bohrfutters entsprechenden Drehrichtung (Pfeil 14) aus dem eingerückten Zustand in den ausgerückten Zustand. Zwischen der Spannhülse 9 und dem Spannring 8 ist eine allgemein mit 17 bezeichnete Rasteinrichtung vorgesehen, die in Umfangsrichtung zwei Raststellungen aufweist, wobei sich in der einen Raststellung das Sperrglied 12 in dem an den Sperrausnehmungen 10 eingerückten Zustand und in der anderen Raststellung im ausgerückten Zustand befindet, wie ein Vergleich der Figurenpaare 4.1, 4.2 bzw. 21.1, 21.2 oder 23.1, 23.2 erkennen läßt.

Der Spannring 8 besitzt einen eine Führung für die Spannhülse 9 bildenden koaxialen Zwischenring 18, der die spannringseitigen Teile der Anschläge 16', 16'' für die Spannhülse 9, der Sperreinrichtung 11 (Sperrglied 12) und der Rasteinrichtung 17 trägt und ein Kragenteil 18' umfaßt, das den das Spanngewinde 7 tragenden Teil des Spannrings 8 drehfest umschließt. Dabei besteht der das Spanngewinde 7 tragende Teil 18'' des Spannrings 8 aus zwei umfangsmäßig geteilten, nämlich zunächst an jeder Teilung durch eine Bohrung 19 geschwächten und dann gebrochenen Ringhälften, die in einer Ringnut 20 des Futterkörpers 1 gegeneinander zusammengesetzt und durch das Kragenteil 18' am Futterkörper 1 zusammengehalten sind. Selbstverständlich kann aber der Spannring 8 auch einstückig ausgebildet sein, was jedoch in der Zeichnung nicht weiter dargestellt ist.

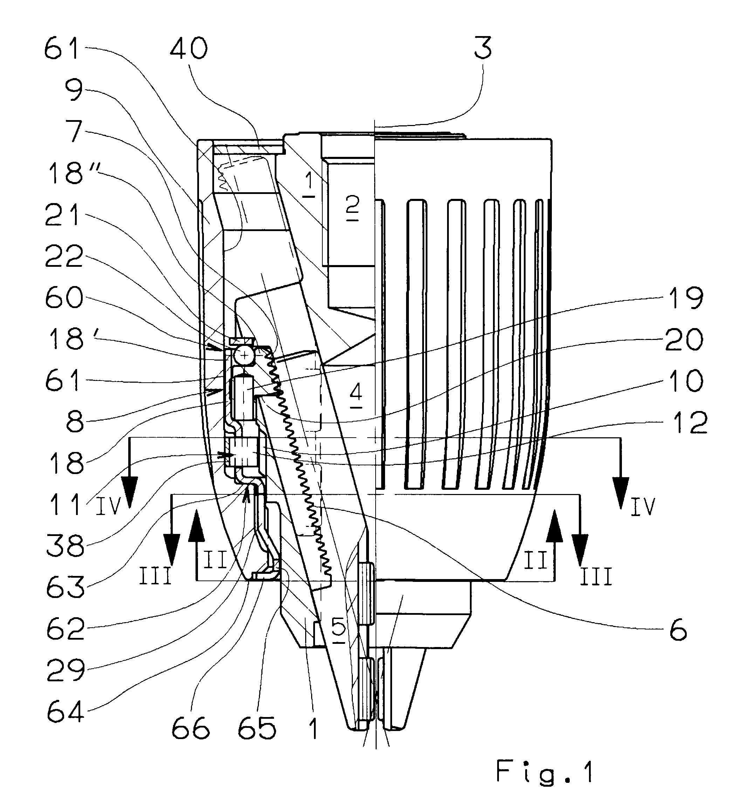

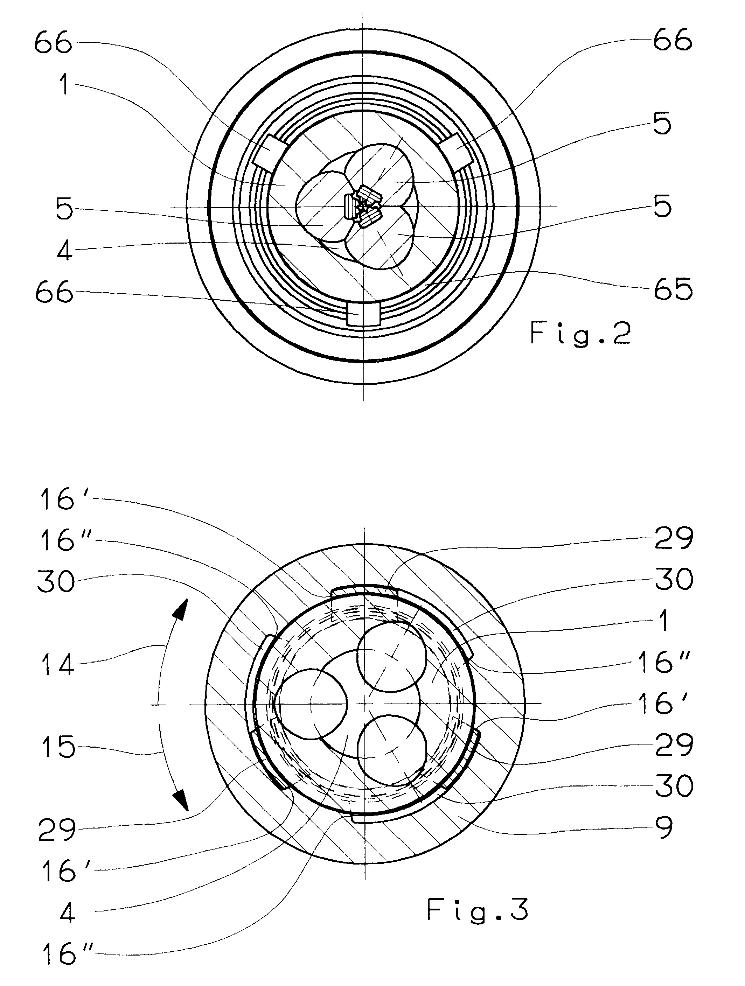

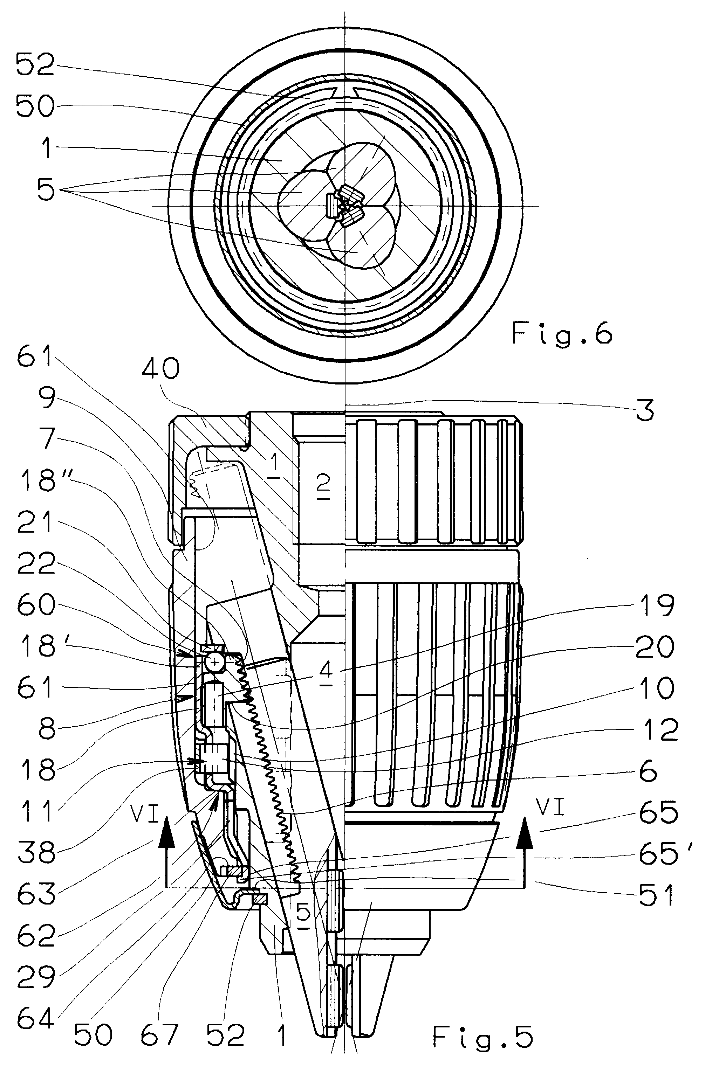

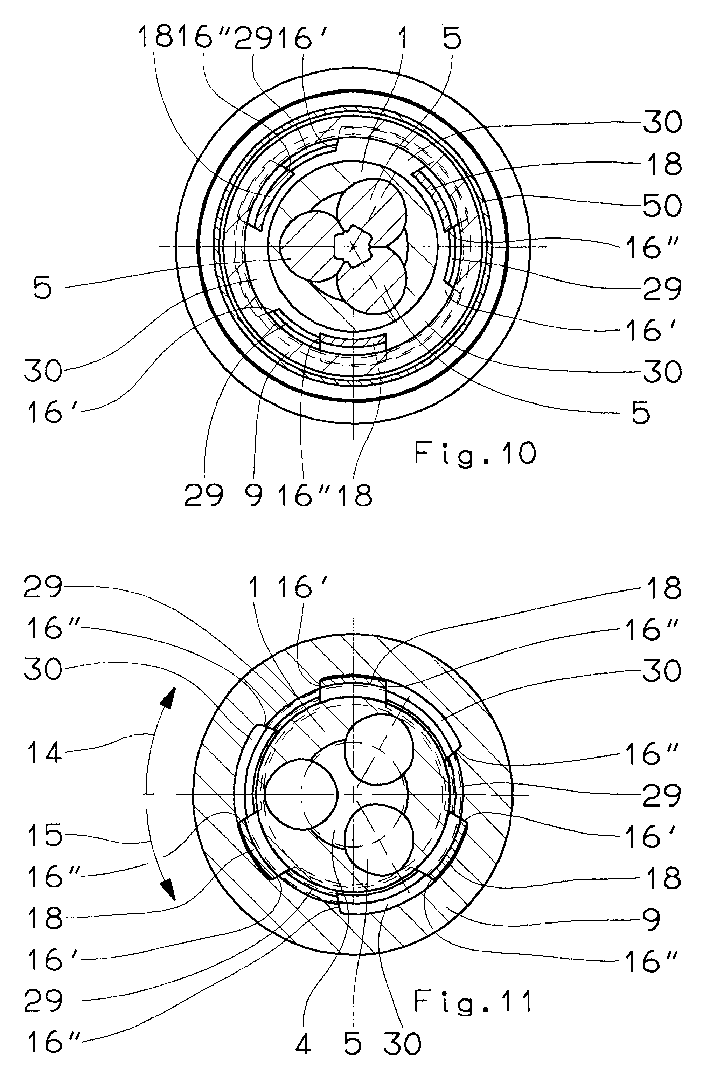

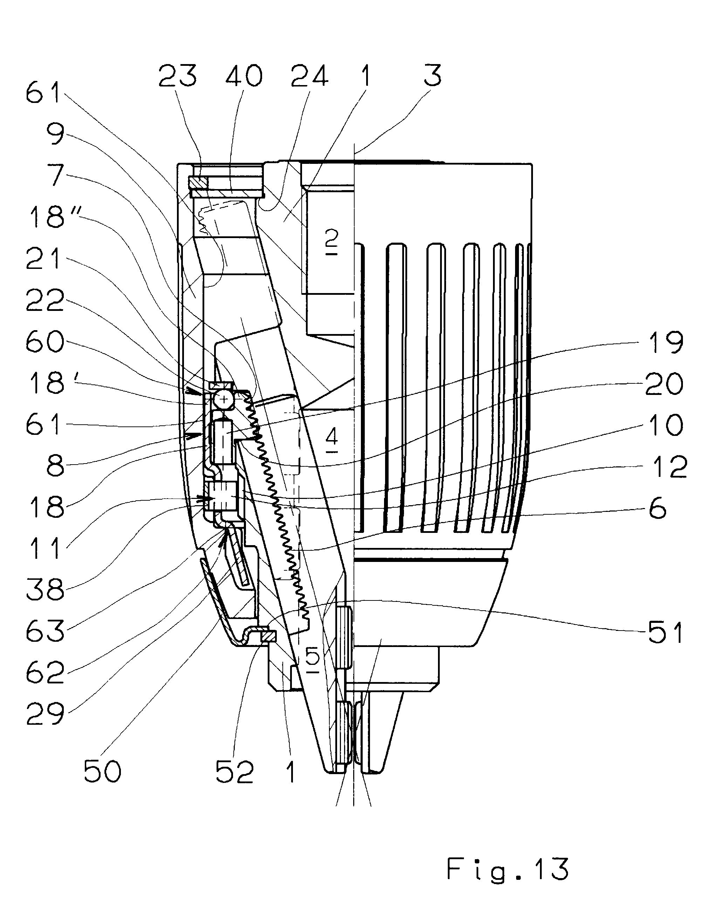

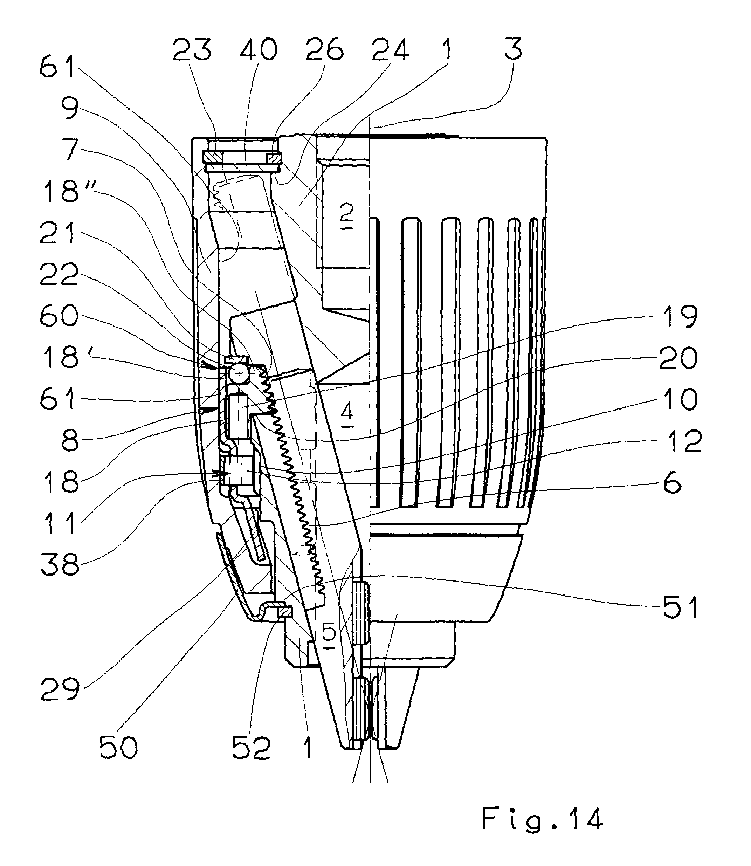

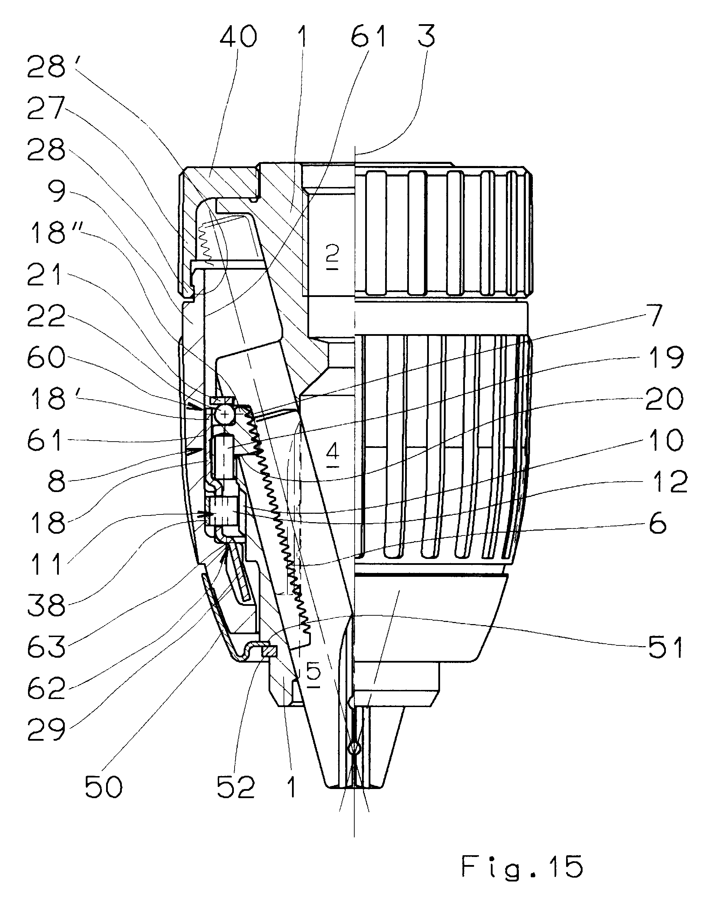

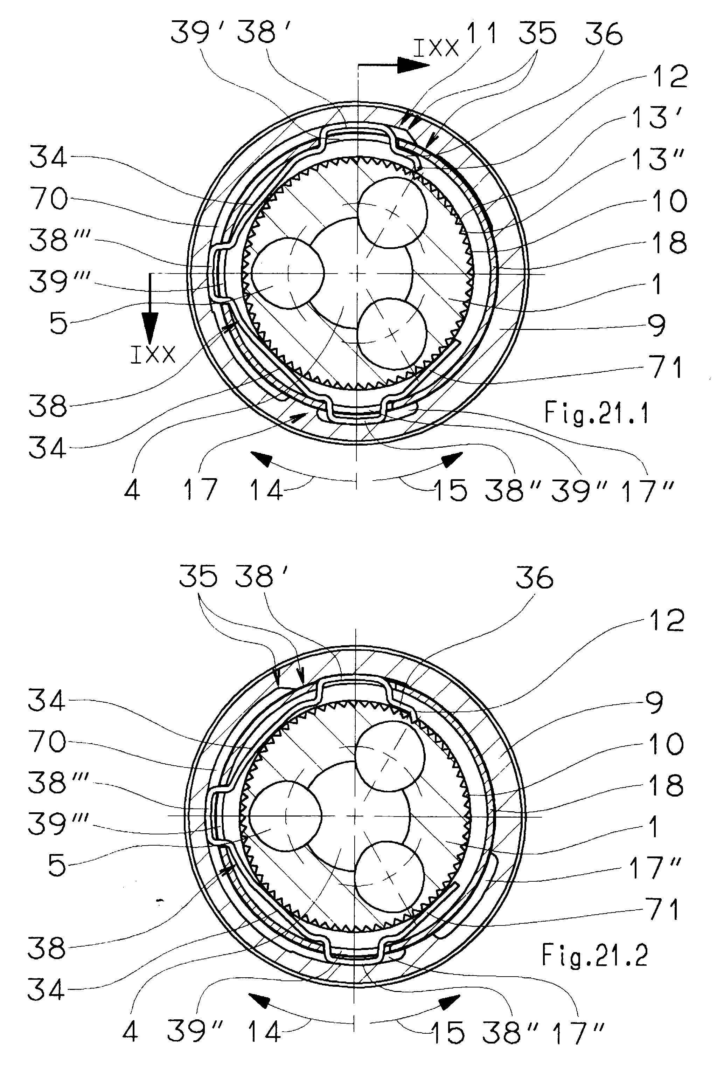

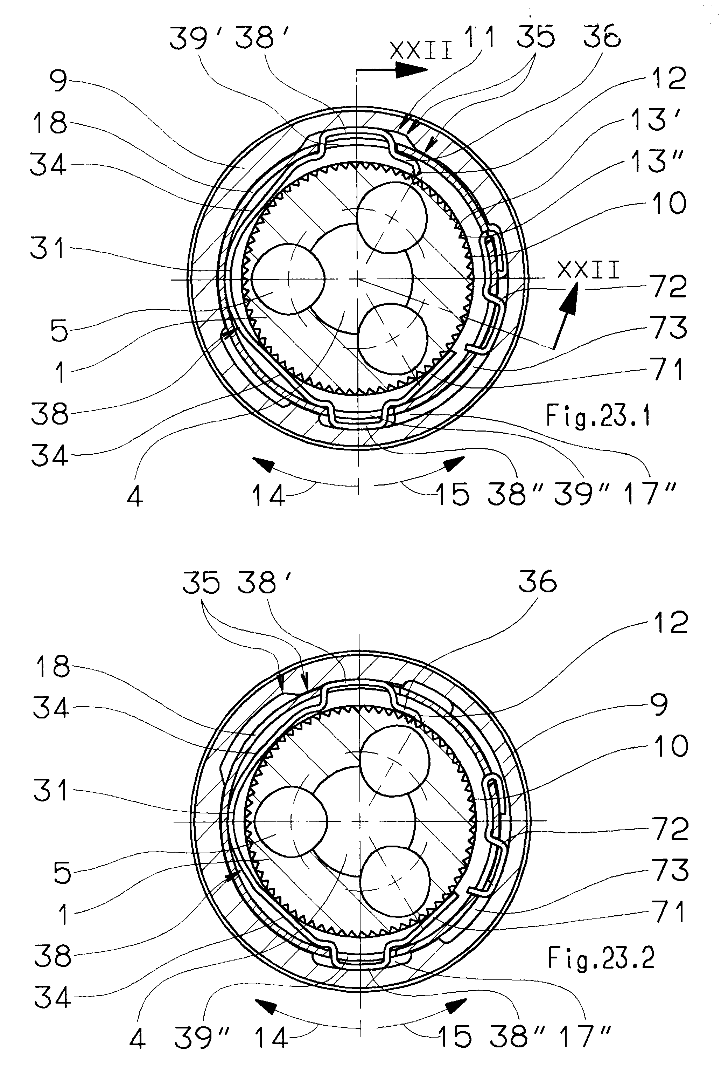

Zur radialen Führung der Spannhülse 9 besitzt der Zwischenring 18 eine rotationssymmetrische, in den Ausführungsbeispielen kreiszylindrische Außenfläche 60, der die Spannhülse 9 mit einer entsprechend kreiszylindrischen Innenfläche 61 anliegt. Die kreiszylindrische Innenfläche 61 der Spannhülse 9 erstreckt sich im gesamten axialen Bereich zwischen ihrem rückwärtigen Hülsenende und dem Spannring 8. Daher kann die in axialer Richtung ungeteilt ausgebildete Spannhülse 9 axial von vorn her über den Futterkörper 1 auf den am Futterkörper fertig montierten Spannring 8 aufgeschoben werden, worauf sie in ihrer aufgeschobenen Endlage axial gesichert wird. Dazu kann der Zwischenring 18 eine kreisringförmige Außenschulter 62 aufweisen, der die Spannhülse 9 zur axialen Abstützung nach hinten mit einer entsprechend kreisringförmigen Innenschulter 63 anliegt. Die entsprechende Sicherung der Spannhülse 9 gegen axiale Verschiebungen nach vorn kann entweder ebenfalls am Zwischenring 18, wie beispielsweise in den Fig. 1 bis 12, oder im Bereich axial hinter dem Spannring 8 durch einen mit dem Futterkörper 1 verbundenen Abschlußring 40 erfolgen, wie etwa in den Fig. 13 bis 18, wobei der Abschlußring 40 auch zur radialen Führung der Spannhülse 9 beitragen oder überhaupt nur zu deren radialen Führung am rückwärtigen Hülsenende vorgesehen sein kann. Dieser Abschlußring 40 kann drehfest am Futterkörper 1 befestigt und als Haltering zum Festhalten des Futterkörpers von Hand ausgebildet sein, wie dies die Fig. 5 und 15 zeigen. Im einzelnen kann die Führung der Spannhülse 9 an einem solchen Abschlußring 40 auf verschiedene Weise erfolgen. In den Fig. 1 bis 12 und 19 bis 23 wirkt diese Führung z. B. nur radial. In Fig. 13 kommt zu der radialen Führung noch die Sicherung der Spannhülse 9 gegen Verschieben axial nach vorn hinzu, wozu der Abschlußring 40 durch einen Sprengring 23 an der Spannhülse axial gesichert ist und am Futterkörper 1 auf einer Außenschulter 24 aufliegt. In Fig. 14 bewirkt der Abschlußring 40 mit Hilfe des Sprengrings 26 zusätzlich auch eine Sicherung der Spannhülse 9 gegen axiales Verschieben nach hinten, so daß in diesem Fall auf die Innenschulter 63 an der Spannhülse 9 verzichtet werden kann. In Fig. 15 ist der axial unverschiebliche und drehfest am Futterkörper 1 gehaltene Abschlußring 40 mit einer kragenförmigen Wand 27 versehen, die ihn als Haltering handhaben läßt, wozu die Kragenwand 27 an ihrer äußeren Umfangsfläche mit einer das Erfassen des Halterings erleichternden Griffprofilierung ausgestattet ist, wie dies auch aus Fig. 5 ersichtlich ist. Die Kragenwand 27 übergreift das Ende der Spannhülse 9 und faßt mit einem Innenbund 28 in eine Ringnut 28' an der Spannhülse 9, wobei der Innenbund 28 an seiner axial rückwärtigen radialen Ringfläche an der entsprechenden Seitenwand der Ringnut 28' anliegt und hierdurch die axiale Sicherung der Spannhülse 9 nach vorn gewährleistet.

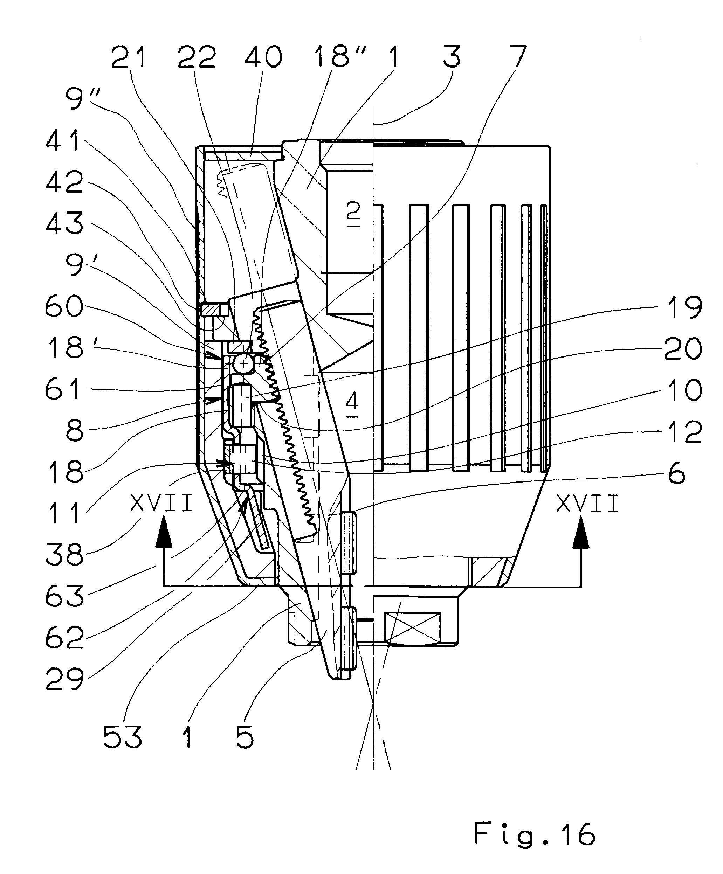

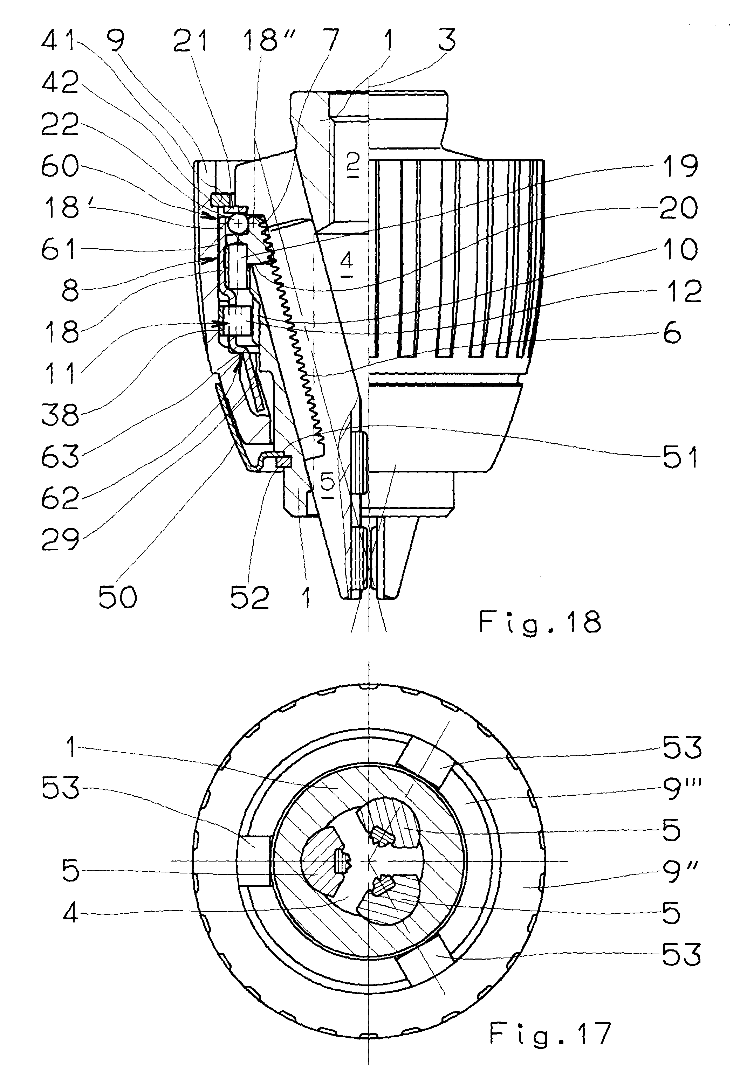

In den Ausführungsformen nach den Fig. 16 und 18 erfolgt die Sicherung der Spannhülse 9 axial nach vorn durch einen zwischen der Spannhülse 9 und dem Futterkörper 1 vorgesehenen, mit beiden axial im Anschlag stehenden Sprengring 41. Dazu ist der Sprengring 41 in einer auf der Wandinnenseite der Spannhülse 9 vorgesehene Ringnut 42 eingesetzt und liegt auf seiten des Futterkörpers 1 axial auf einem Ringfalz 43 gemäß Fig. 16 oder auf einem Druckring 21 gemäß Fig. 18, der zum Kugellager 22 gehört, an dem der Spannring 8 gegen den Futterkörper 1 axial nach hinten abgestützt ist. - Die axiale Sicherung der Spannhülse 9 allein am Zwischenring wird weiter unten noch im einzelnen beschrieben.

Außer in den Ausführungsformen nach den Fig. 1 und 16 ist axial vor der Spannhülse 9 ein ihr gegenüber frei verdrehbarer Anschlagring 50 vorgesehen, der am Futterkörper 1 axial unverschiebbar und drehbar gelagert ist, wozu der Anschlagring 50 axial nach hinten an einer Ringschulter 51 des Futterkörpers 1 und axial nach vorn an einem Sprengring 52 gehalten ist, der in einer Ringnut am Futterkörper 1 sitzt. Der Anschlagring 50 schützt die Spannhülse 9 davor, beim Durchbohren einer Wand an die Wand anzustoßen und dadurch gebremst zu werden, was dazu führen könnte, daß das Bohrfutter sich so festzieht, daß es nur noch mit Mühe wieder geöffnet werden kann. Auch schützt der Anschlagring 50 die Spannhülse 9 gegen größere axiale Belastung von vorn, so daß die axiale Abstützung der Spannhülse 9 nach hinten am Zwischenring 18 entsprechend gering beansprucht wird. Im übrigen schützt der Anschlagring 50 die häufig als reines Kunststoffteil ausgebildete Spannhülse 9 vor den im vorderen Hülsenteil besonders hohen Verschleißbeanspruchungen.

Die Fig. 16 zeigt ein Ausführungsbeispiel, bei dem die Spannhülse 9 in radialer Richtung zweiwandig aus einer inneren Kunststoffhülse 9' und einer äußeren Mantelhülse 9'' aus Stahl zusammengesetzt ist, wobei der Stahlmantel 9'' dem äußeren Schutz der Kunststoffhülse 9' dient. Beide Hülsen 9', 9'' sind relativ zueinander gegen Verdrehen dadurch gesichert, daß die Mantelhülse 9'' an der vorderen Stirnfläche der Spannhülse 9 auf die Stirnfläche 9''' der Kunststoffhülse 9' umgebogene Zungen 53 besitzt, die in im wesentlichen radiale Aussparungen an der Stirnfläche 9''' der Kunststoffhülse 9' eingesenkt sind, so daß sich die beiden Hülsen 9', 9'' über diese Zungen 9''' in Drehrichtung gegenseitig mitnehmen.

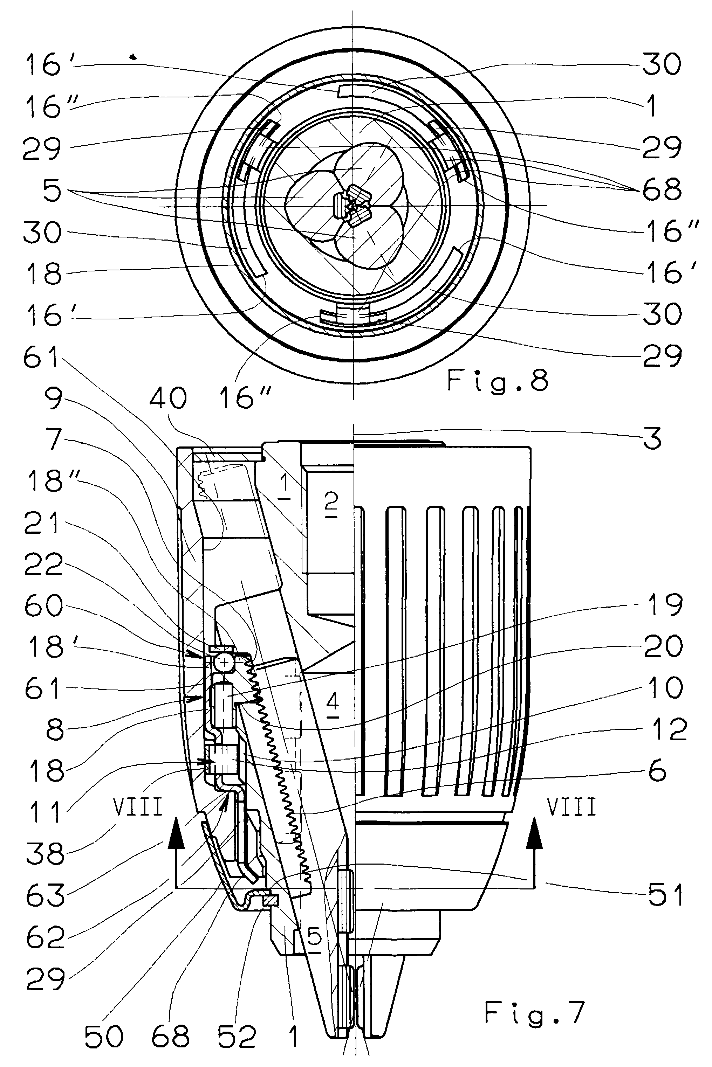

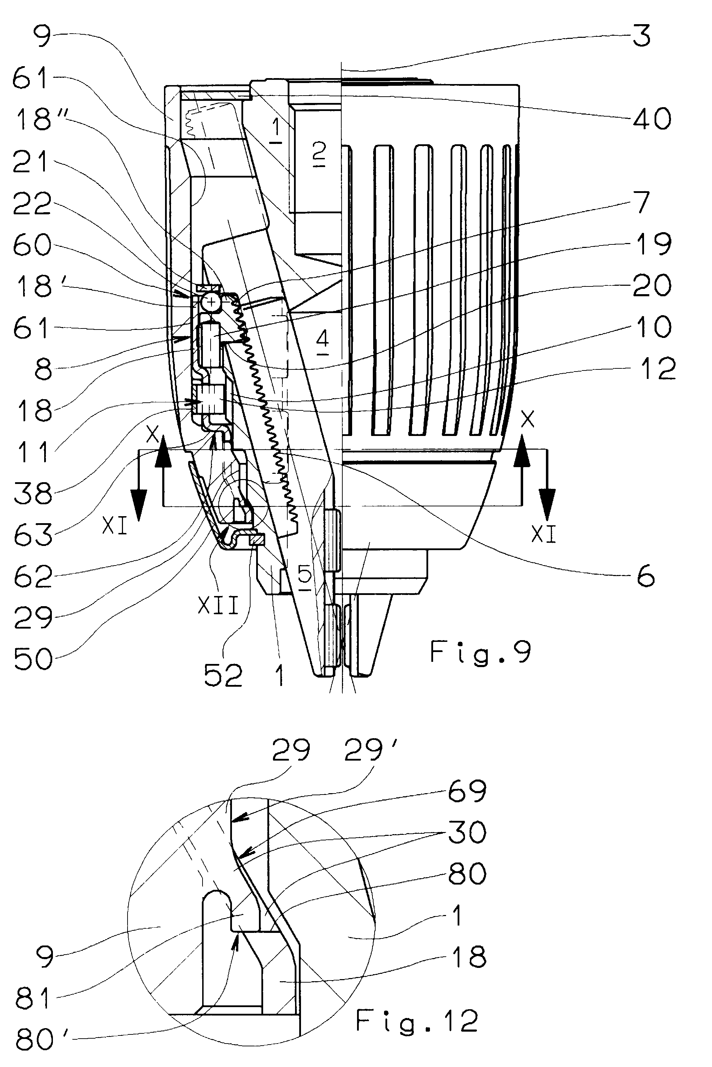

Für die Anschläge 16', 16'' zur Drehbegrenzung zwischen der Spannhülse 9 und dem Zwischenring 18 sind allgemein mit 29 bezeichnete Anschlagstücke am einen Teil, also Zwischenring 18 oder Spannhülse 9, und eine das Anschlagstück 29 aufnehmende Aussparung 30 am jeweils anderen Teil vorgesehen, wobei das Anschlagstück 29 an den Enden des Drehwegs jeweils mit einer der die Aussparung 30 in Umfangsrichtung begrenzenden beiden Stirnflächen 16', 16'' zum Anschlag kommt. In den Ausführungsbeispielen sind jeweils drei solcher gleichmäßig über den Futterumfang verteilt angeordneter Anschlagstücke 29, bzw. Aussparungen 30 vorhanden. Im einzelnen können, wie in den Fig. 1 bis 8 oder 13 bis 23, die Anschlagstücke 29 als Wandstücke des Zwischenrings 18 ausgebildet sein, die vom vorderen Rand des Zwischenrings 18 axial nach vorn in die auf der Wandinnenseite der Spannhülse 9 ausgebildeten Aussparungen 30 vorstehen. Die Aussparungen 30 können im wesentlichen bis zum vorderen Rand 64 der Spannhülse 9 reichen. Die Anschlagstücke 29 durchgreifen dann die Aussparungen 30 axial bis zum vorderen Rand 64 und sind dort an ihrem vorderen Ende als axialer Anschlag für die Spannhülse 9 ausgebildet, der die Spannhülse gegen Verschieben axial nach vorn sichert. Dazu sind in den Fig. 1 bis 6 die Anschlagstücke 29 an ihrem unteren Ende in Umfangsrichtung durch einen Ring 65 miteinander verbunden, der an seinem den Anschlagstücken 29 abgewandten Rand Zungen 66 trägt, die, wie in Fig. 1, auf die vordere Stirnfläche der Spannhülse 9 umgebogen sind, wobei die Zungen wie in Fig. 1 bündig in die Stirnfläche der Spannhülse 9 eingesenkt sein können, aber auch ohne ein solches Einsenken oben auf der Stirnfläche aufliegen können. Im Ausführungsbeispiel nach Fig. 5 dagegen ist der Ring 65 lediglich mit einer schmalen, auswärts gerichteten Ringschulter 65' versehen, an der ein Sprengring 67 gehalten ist, der in einem Ringfalz auf der Stirnseite der Spannhülse 9 liegt. Im Ausführungsbeispiel nach Fig. 7 durchsetzen die Anschlagstücke 29 in der Wand der Spannhülse 9 vorgesehene Schlitze, die in Umfangsrichtung längs eines Kreisbogens verlaufen und die Aussparungen 30 bilden. Die Enden der Anschlagstücke 29 bilden wiederum Zungen 68, die am vorderen Rand der Spannhülse 9 radial einwärts umgebogen sind, so daß die Zungen 68 auch hier, wie schon die Zungen 66 im Ausführungsbeispiel nach Fig. 1 und die Ringschulter 65' mit dem Sprengring 67 nach dem Ausführungsbeispiel der Fig. 5 die Spannhülse 9 gegen Verschieben axial nach vorn sichern, so daß in diesen Fällen die Führung der Spannhülse 9 radial wie axial allein am Zwischenring 18 erfolgen kann. - Die Fig. 9 bis 12 zeigen ein weiteres Ausführungsbeispiel eines Bohrfutters mit axialer Führung der Spannhülse 9 allein am Zwischenring 18. Dazu sind die Anschlagstücke 29 als radial einwärts gerichtete Nocken an der Wandinnenseite der Spannhülse 9 und die Aussparungen 30 als Fenster in einem sich axial nach vorn konisch verjüngenden Kragen 69 des Zwischenrings 18 ausgebildet. Die radial innenliegende Fläche 29' der Nocken 29 besitzt einen Abstand von der Futterachse 3, der mindestens gleich dem größten Außendurchmesser 80' des Fensterrands 80 am Zwischenring 18 ist, so daß die die Anschlagstücke 29 bildenden Nocken das Aufschieben der Spannhülse 9 auf den Zwischenring 18 nicht behindern. Die Nocken 29 tragen jeweils eine radial federnde Rastnase 81, die bei auf den Zwischenring 18 vollständig aufgeschobener Spannhülse 9 hinter dem axial vorderen Rand 80 des Fensters 30 einrastet und dadurch die Spannhülse 9 gegen Verschieben axial nach vorn sichert, wie dies im einzelnen aus Fig. 12 ersichtlich ist.

Die Rasteinrichtung 17 ist von in den beiden Raststellungen miteinander zum Eingriff kommenden Rastelementen, nämlich einem Rastvorsprung 38'' und Rastaufnahmen 17'' gebildet. Im einzelnen trägt der Zwischenring 18 sich in Umfangsrichtung erstreckende Federstege 34, an dem sich der Rastvorsprung 38'' befindet, während die Rastaufnahmen 17'' auf der Wandinnenseite der Spannhülse 9 ausgebildet sind. Der Federsteg 34 ist mit dem für den Rastvorgang jeweils erforderlichen Federweg ausgestattet.

Zur Steuerung des Sperrglieds 12 ist an der Spannhülse 9 eine Steuerkurve 35 ausgebildet. Das Sperrglied 12 befindet sich dabei an einem sich in Umfangsrichtung erstreckenden, vom Zwischenring 18 getragenen Federarm 36. Im eingerückten Zustand des Sperrglieds 12 liegt der Federarm 36 der Steuerkurve 35 in einem solchen Abstand vom Sperrglied 12 an, daß der Federarm 36 an der Stelle des Sperrglieds 12 um dessen Eingriffstiefe in die Sperrausnehmungen 10 durchfedern kann, so daß beim Verdrehen der Spannhülse 9 gegenüber dem Futterkörper 1 in der dem Spannen des Futters entsprechenden Drehrichtung (Pfeil 15) das Sperrglied 12 über die Sperrausnehmungen 10 in der schon beschriebenen Weise hinwegrutschen kann.

Die Federstege 34 und der Federarm 36 sind von einem in den Zwischenring 18 mit auswärts gerichteter Vorspannung eingelegten, mit seiner Bandfläche zur Futterachse 3 parallelen Federband 38 gebildet, so daß das Sperrglied 12 durch die Federvorspannung außer Eingriff an den Sperrausnehmungen 10 gehalten, im Sperrzustand aber über die Steuerkurve 35 in die Sperrausnehmungen 10 hineingedrückt wird. An dem Federband 38 befinden sich zwei in Umfangsrichtung in gegenseitigem Abstand befindliche, den Zwischenring 18 in Fenstern 39', 39'' nach außen durchgreifende Vorsprünge 38', 38", die durch Anschlag an den die Fenster 39', 39'' begrenzenden Fensterrändern das Federband 38 gegen Verdrehen am Zwischenring 18 sichern und von denen der sperrgliedseitige Vorsprung 38' die Anlage des Federarms 36 an der Steuerkurve 35, der andere Vorsprung 38'' den Rastvorsprung der Rasteinrichtung 17 bildet. Das Sperrglied 12 ist unmittelbar durch das eine Ende des Federbandes 38 gebildet, nämlich, gesehen in der dem Schließen des Bohrfutters entsprechenden Drehrichtung der Spannhülse 9 (Pfeil 15), durch das rückwärtige Bandende. In den Ausführungsbeispielen nach den Fig. 1 bis 4 liegen sich die beiden Vorsprünge 38', 38'' des Federbandes 38 in Bezug auf die Futterachse 3 etwa diametral gegenüber. In dem die beiden Vorsprünge 38', 38'' verbindenden Teil bildet das Federband 38 einen Scheitelbereich 31, in dem es innenseitig am Zwischenring 18 anliegt. Die Federstege 34 auf beiden Seiten dieses Scheitelbereichs 31 können, jedenfalls beim Sperreingriff des Sperrglieds 12 in die Sperrausnehmungen 10, beide federnd an dem Kranz der Sperrausnehmungen 10 anliegen, so daß sich das Federband 38 in seiner Lage im Zwischenraum zwischen dem Futterkörper 1 und dem Zwischenring 18 selbsttätig justiert. In diesem Sinne günstig erweist sich auch ein Federschenkel 71, den das Federband 38 mit seinem dem Vorsprung 38'' abgewandten Ende bildet und der ebenfalls unter Vorspannung dem Kranz der Sperrausnehmungen 10 anliegt. Die dem Futterkörper 1 anliegenden beiden Federstege 34 und der Federschenkel 71 üben im übrigen eine Bremswirkung aus, durch die beim Bohrbetrieb auftretende Futterschwingungen an Futterkörper 1, Spannring 8 bzw. Zwischenring 18 und Spannhülse 9 gedämpft werden.

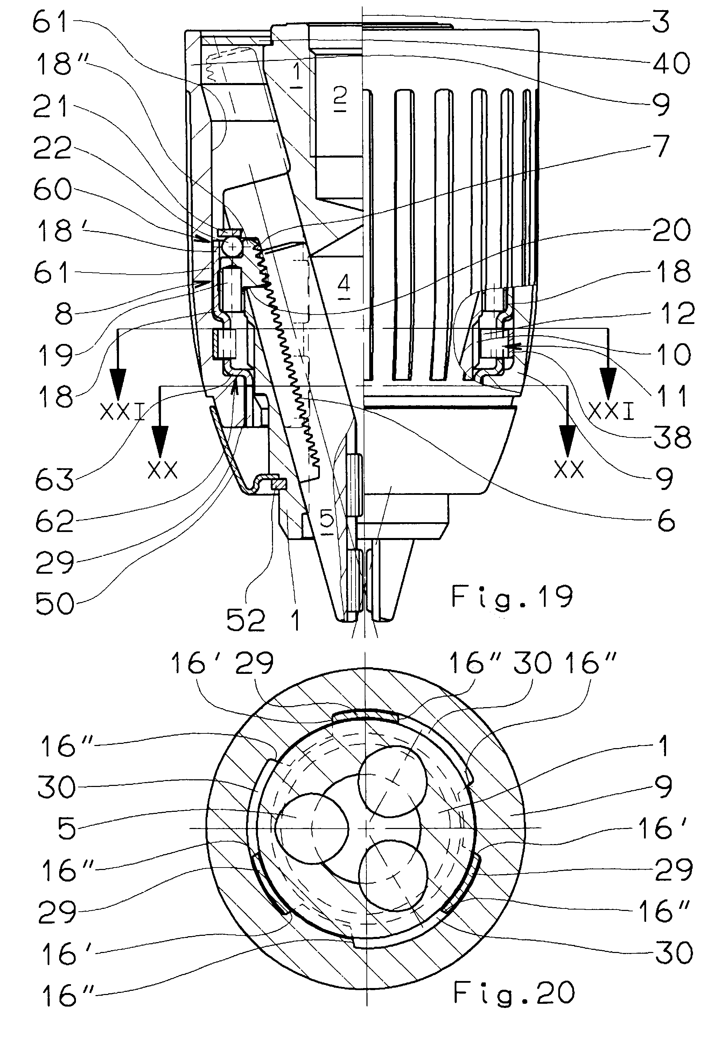

Im Ausführungsbeispiel nach den Fig. 19 bis 23 besitzt das Federband 38 in Umfangsrichtung zwischen seinen Vorsprüngen 38', 38'' einen dritten, den Zwischenring 18 in einem Fenster 39''' nach außen durchgreifenden Vorsprung 38''', der in eine auf der Wandinnenseite der Spannhülse 9 vorgesehene Nut 70 greift, die sich in Umfangsrichtung mindestens über den maximal möglichen Verdrehungsweg der Spannhülse 9 gegenüber dem Zwischenring 18 erstreckt und mit ihren Seitenwänden jeweils eine axiale Anlage für den Vorsprung 38''' bildet, wodurch die Spannhülse 9 gegen Axialverschiebungen am Zwischenring 18 in beiden Axialrichtungen gesichert ist, so daß in diesem Fall auch auf die Ringschulter 63 verzichtet werden könnte. Eine vergleichbare axiale Führungsfunktion empfiehlt sich für die beiden Vorsprünge 38' und 38'' jedoch nicht, da hier die Anlage des Federbands 38 an den Seitenwänden entsprechender Nuten die für den Sperrvorgang bzw. Rastvorgang erforderliche Beweglichkeit der beiden Vorsprünge 38', 38'' beeinträchtigen könnte. Im übrigen ist auch hier der mittlere Vorsprung 38''' mit den benachbarten Vorsprüngen 38', 38'' durch je einen Federsteg 34 verbunden, die wie der Federschenkel 71 eine Anlage am Kranz der Sperrausnehmungen 10 des Futterkörpers 1 ergeben können.

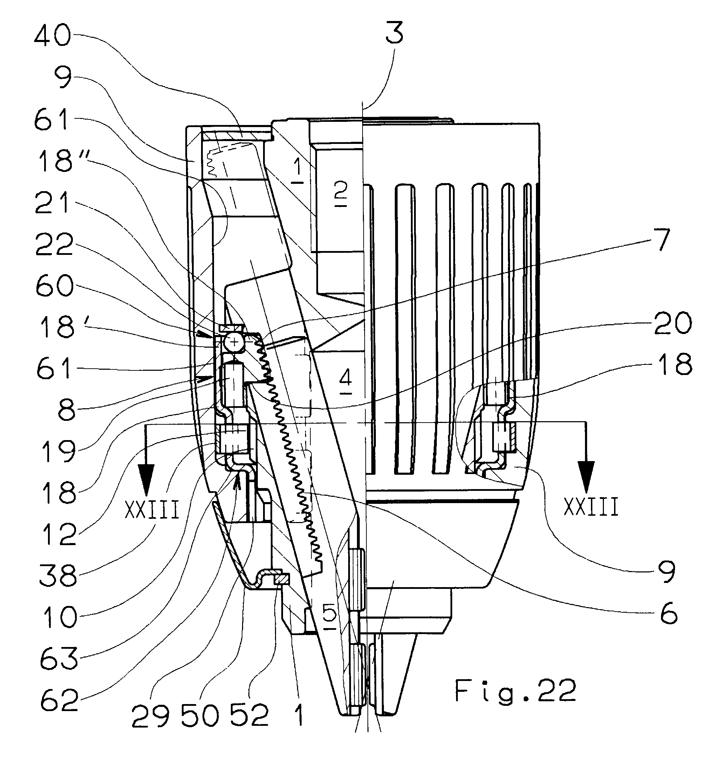

Im Ausführungsbeispiel nach den Fig. 22 bis 23 ist anstelle der durch den mittleren Vorsprung 38''' des Federbandes 38 bewirkten Axialführung der Spannhülse 9 am Zwischenring 18 eine vom Federband 38 unabhängige Federspange 72 vorgesehen, die sich am Zwischenring 18 an einer in Umfangsrichtung zwischen den Vorsprüngen 38', 38'' und, in Bezug auf die Futterachse 3, etwa diametral gegenüber dem Scheitelbereich 31 befindet. Die Federspange 72 greift ebenfalls radial nach außen in eine auf der Wandinnenseite der Spannhülse 9 vorgesehene Nut 73, die sich wie die Nut 70 in Umfangsrichtung mindestens über den maximal möglichen Verdrehungsweg der Spannhülse 9 gegenüber dem Zwischenring 18 erstreckt und die mit ihren Seitenwänden ebenfalls eine axiale Anlage für die Federspange 72 bildet, wodurch die Federspang 72 in gleicher Weise wie der mittlere Vorsprung 38''' eine Sicherung der Spannhülse 9 gegen Axialverschiebungen am Zwischenring 18 ergibt.

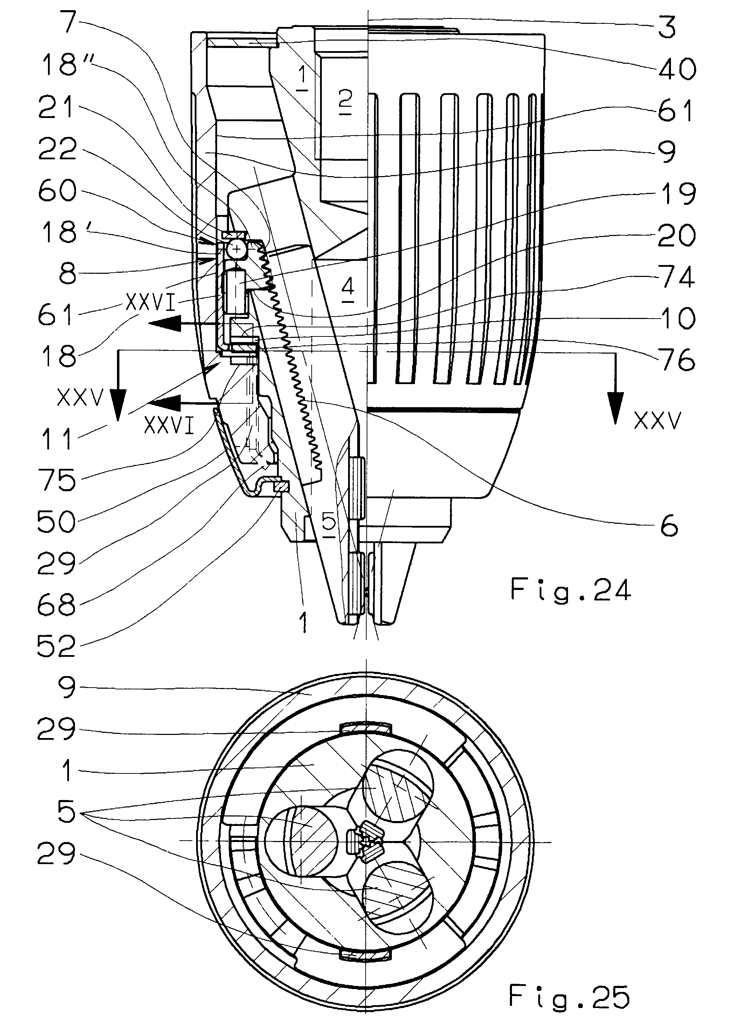

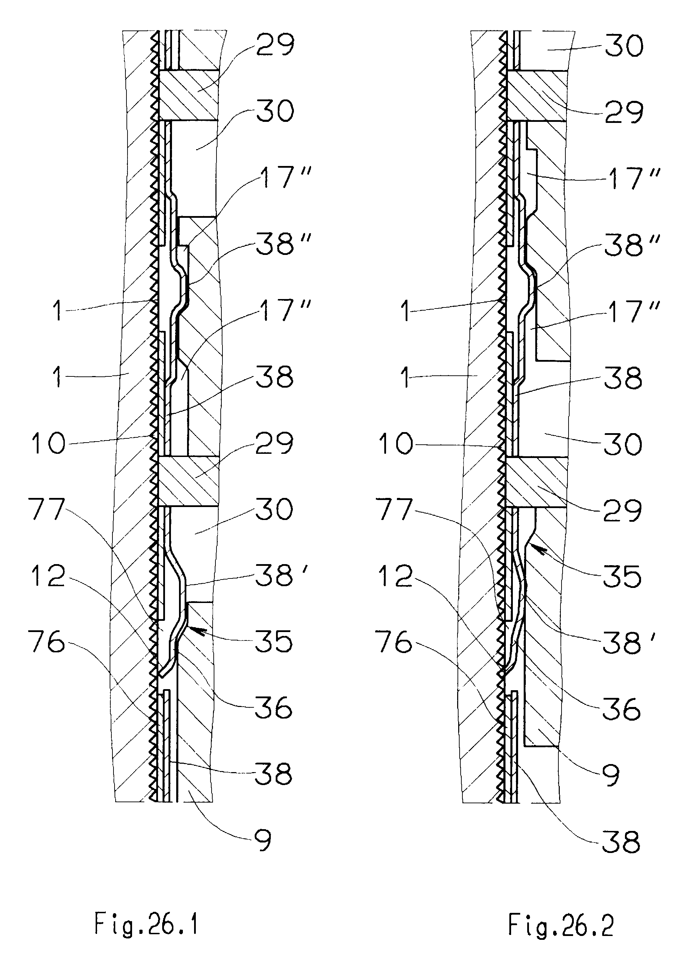

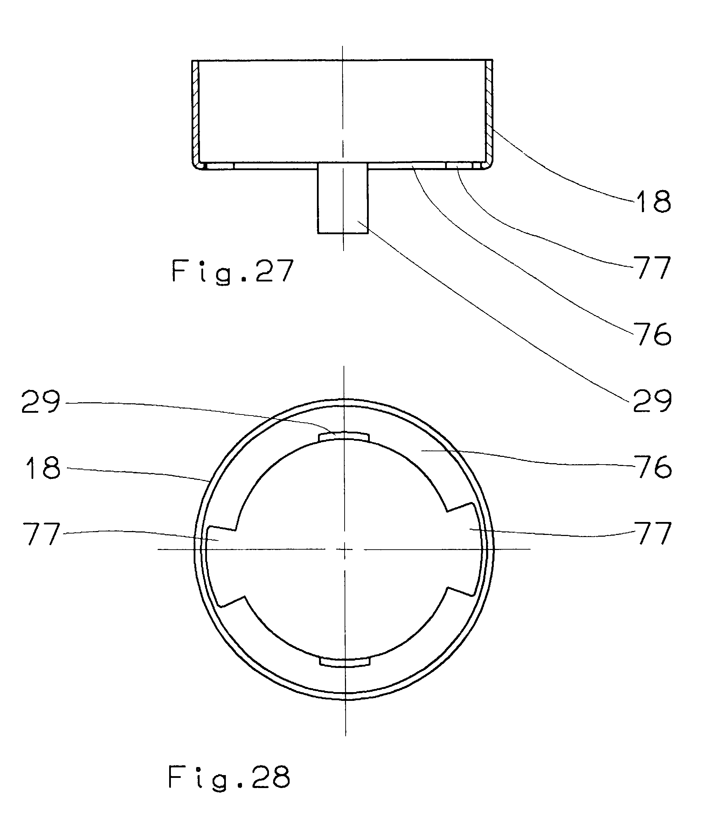

Im Ausführungsbeispiel nach den Fig. 24 bis 28 ist das Federband 38 mit seiner Bandfläche senkrecht zur Futterachse 3 in einer Radialebene angeordnet, wobei die Sperrausnehmungen 10 im wesentlichen radial an einem Ringfalz 74 des Futterkörpers 1 verlaufen. Zwischen diesem Ringfalz 74 und einer Ringschulter 75 der Spannhülse 9 liegt der Zwischenring 18 mit einer radial gerichteten Ringwand 76, und das Federband 38 liegt zwischen dieser Ringwand 76 und der Ringschulter 75, an der die Rastaufnahmen 17'' für den Rastvorsprung 38'' und die Steuerkurve 35 für den das Sperrglied 12 mit seinem Federarm 36 tragenden Vorsprung 38'. Die Ringwand 76 ist an der Stelle des Sperrglieds 12 mit einem Fenster 77 versehen, durch das hindurch das Sperrglied 12 in die Sperrausnehmungen 10 eingerückt werden kann. Ein vergleichbares Fenster 77 befindet sich an der Stelle des Rastvorsprungs 38", damit dessen Rastbewegungen nicht durch die Ringwand 76 behindert werden.

In den Ausführungsbeispielen sind die Anschläge 16', 16", die Sperreinrichtung 11 und die Rasteinrichtung 17 axial vor dem Spanngewinde angeordnet. Selbstverständlich liegt es im Rahmen der Erfindung, diese Teile, zumindest einige davon, axial hinter dem Spanngewinde 7 vorzusehen, wobei sich insbesondere der körperfeste Druckring 21 dazu anbietet, mit den Sperrausnehmungen 10 versehen zu werden.

Im folgenden wird die Funktionsweise des erfindungsgemäßen Bohrfutters anhand des Ausführungsbeispiels nach den Fig. 1 bis. 4.1, 4.2 kurz erläutert:

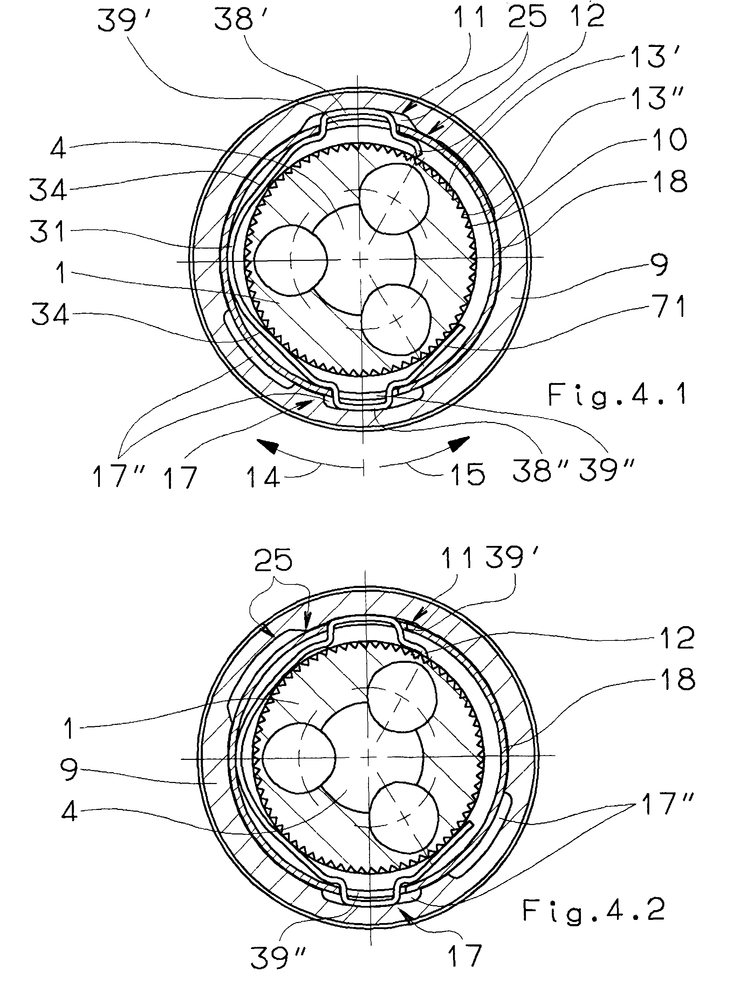

Die Fig. 1 bis 4.1 zeigen das Bohrfutter im ungesperrten Zustand. Der Federarm 36 ist radial nach außen verstellt, so daß das Sperrglied 12 außerhalb der Sperrausnehmungen 10 steht. Der in die Rastausnehmung 17'' greifende Rastvorsprung 38'' sichert Zwischenring 18 und Spannhülse 9 gegen Verdrehungen gegeneinander, so daß beim Drehen der Spannhülse 9 über den Zwischenring 18 der Spannring 8 relativ zum Futterkörper 1 frei verdreht werden kann, solange das Bohrfutter offen ist. Befindet sich in der Werkzeugaufnahme 4 des Bohrfutters ein Bohrerschaft und wird die Spannhülse 9 in Richtung des Pfeils 15, also im Sinne eines Schließens des Futters verdreht, erfolgt zunächst eine Mitnahme des Spannrings 8 in der schon beschriebenen Weise, bis die Spannbacken 5 am Werkzeugschaft zur Anlage kommen. Eine weitere Mitnahme des Spannrings 8 durch die Spannhülse 9 ist dann nicht mehr möglich, so daß sich die Spannhülse 9 unter Überwindung der Rasteinrichtung 17 in die in Fig. 4.2 gezeigte Stellung gegenüber dem Zwischenring 18 verstellt. In dieser Stellung drückt die Spannhülse 9 über die Steuerkurve 35 den Federarm 36 radial nach innen und damit das Sperrglied 12 in den eingerückten Zustand an den Sperrausnehmungen 10. Damit ist der Spannring 8 gegenüber dem Futterkörper 1 gegen ein Verdrehen in Richtung des Pfeiles 14 und damit gegen ein unerwünschtes Öffnen des Bohrfutters gesichert. Jedoch kann das Bohrfutter weiter und fester gespannt, nämlich die Spannhülse 9 relativ zum Futterkörper 1 in Richtung des Pfeiles 15 verdreht werden, wobei nun die Spannhülse 9 über die Anschläge 16'' den Zwischenring 18 und damit den Spannring 8 in Richtung des Pfeiles 15 festzieht. - Zum Lösen und Öffnen des gespannten Futters (Fig. 4.2) wird zunächst die Spannhülse 9 in Richtung des Pfeiles 14 verdreht, wobei zunächst wieder die Rasteinrichtung 17 verstellt wird und sich die Anschlagstücke 29 in den Aussparungen 30 wieder in den aus Fig. 4.2 ersichtlichen Zustand verstellen und gleichzeitig die Steuerkurve 35 den Federarm 36 freigibt, so daß der Federarm 36 aufgrund seiner Vorspannung radial nach außen verstellen kann, bis das Sperrglied 12 aus den Sperrausnehmungen 10 ausgetreten ist. Beim weiteren Drehen der Spannhülse 9 wird über die Anschläge 16' der Spannring 8 mitgenommen, wodurch das Bohrfuter gelöst und geöffnet wird. - Im Ergebnis ist zur Handhabung des erfindungsgemäßen Bohrfutters nur die drehende Betätigung der Spannhülse 9 gegenüber dem Futterkörper erforderlich, was nur eine Hand erfordert, wenn der Futterkörper 1 über die Bohrspindel gehalten oder umgekehrt die Spannhülse 9 von Hand festgehalten und der Futterkörper 1 durch die Bohrspindel 1 gedreht wird. Die Spannhülse 9 kann sich daher axial über praktisch die ganze Länge des Bohrfutters bis zum axial hinteren Futterende erstrecken und dabei die einzige von außen der Hand zugängliche Futterhandhabe bilden. Nur wenn dennoch gewünscht wird, den Futterkörper 1 auch unabhängig von der Bohrspindel manipulieren zu können, empfiehlt sich ein eigener Abschlußring 40 in Form des Halterings für den Futterkörper 1, wie dies in den Fig. 5 und 15 gezeigt ist.

## Patentansprüche

1. Bohrfutter, insbesondere zum Schlagbohren, mit einem an eine Bohrspindel anschließbaren Futterkörper (1), mit im Futterkörper geführten, zwischen sich eine Aufnahme (4) für das Bohrwerkzeug bildenden Spannbacken (5), die zum Öffnen und Schließen des Bohrfutters über eine Verzahnung (6) mit dem Spanngewinde (7) eines am Futterkörper drehbar und axial unverschiebbar geführten Spannrings (8) im Eingriff stehen, zu dessen Betätigung eine koaxiale, ebenfalls axial unverschiebbare Spannhülse (9) vorgesehen ist, ferner mit einer Sperreinrichtung (11) für den Spannring (8), bestehend aus einem koaxialen Kranz von Sperrausnehmungen (10) und aus mindestens einem Sperrglied (12), das unter Federkraft in die Sperrausnehmungen (10) eingerückt ist, wobei das Sperrglied (12) und die Sperrausnehmung (10) einander in derart geneigten Flankenflächen (13', 13") anliegen, daß diese den Spannring (8) in der dem Öffnen des Bohrfutters entsprechenden Drehrichtung gegen Verdrehen sperren, beim Verdrehen des Spannrings (8) in der entgegen gesetzten, also dem Schließen des Bohrfutters entsprechenden Drehrichtung aber das Sperrglied (12) gegen die Federkraft aus den Sperrausnehmungen (10) herausdrücken und dadurch von Sperrausnehmung zu Sperrausnehmung verrutschen lassen, und wobei das Sperrglied (12) zwischen dem an den Sperrausnehmungen (10) eingerückten Zustand und einem aus den Sperrausnehmungen (10) ausgerückten Zustand verstellbar ist, dadurch gekennzeichnet, daß die Spannhülse (9) relativ zum Spannring (8) verdrehbar ist und Anschläge (16', 16") vorgesehen sind, welche die Verdrehung der Spannhülse (9) relativ zum Spannring (8) in beiden Drehrichtungen begrenzen, daß die Sperreinrichtung zwischen dem Spannring (8) und dem Futterkörper (1) ausgebildet und das Sperrglied (12) durch Verdrehen der Spannhülse (9) relativ zum Spannring (8) zwischen dem an den Sperrausnehmungen (10) eingerückten Zustand und dem ausgerückten Zustand verstellbar ist, wobei durch Verdrehen der Spannhülse (9) in der dem Schließen des Bohrfutters entsprechenden Drehrichtung das Sperrglied (12) sich aus dem ausgerückten Zustand in den eingerückten Zustand verstellt und umgekehrt, daß weiter zwischen der Spannhülse (9) und dem Spannring (8) eine Rasteinrichtung (17) vorhanden ist, die in Umfangsrichtung zwei Raststellungen aufweist, wobei sich in der einen Raststellung das Sperrglied (12) in dem an den Sperrausnehmungen (10) eingerückten Zustand und in der anderen Raststellung im ausgerückten Zustand befindet, und daß die Spannhülse (9) den Spannring (8) umschließt und in axialer Richtung über seine gesamte Länge abdeckt und im Bereich axial vor dem Spanngewinde (7) nur am Spannring (8) geführt ist.

2. Bohrfutter nach Anspruch 1, dadurch gekennzeichnet, daß der Spannring (8) einen eine Führung für die Spannhülse (9) bildenden koaxialen Zwischenring (18) aufweist, der die spannringseitigen Teile der Anschläge (16', 16") für die Spannhülse (9), der Sperreinrichtung (10, 12) und der Rasteinrichtung (17) trägt und ein Kragenteil (18') umfaßt, das den das Spanngewinde (7) tragenden Teil des Spannrings (8) drehfest umschließt.

3. Bohrfutter nach Anspruch 2, dadurch gekennzeichnet, daß der das Spanngewinde (7) tragende Teil des Spannrings (8) aus zwei Ringhälften besteht, die durch das Kragenteil (18') am Futterkörper zusammengehalten sind.

4. Bohrfutter nach Anspruch 2 oder 3, dadurch gekennzeichnet, daß der Zwischenring (18) zur radialen Führung der Spannhülse (9) eine rotationssymmetrische Außenfläche (60) besitzt, der die Spannhülse (9) mit einer entsprechend rotationssymmetrischen Innenfläche (61) anliegt.

5. Bohrfutter nach Anspruch 4, dadurch gekennzeichnet, daß die rotationssymmetrische Innenfläche (61) der Spannhülse (9) im gesamten axialen Bereich zwischen ihrem rückwärtigen Hülsenende und dem Spannring (8) einen lichten Innendurchmesser besitzt, der mindestens gleich ist ihrem Innendurchmesser am Spannring (8), und daß die in axialer Richtung ungeteilt ausgebildete Spannhülse (9) axial von vorn her über den Futterkörper (1) auf den am Futterkörper fertig montierten Spannring (8) aufgeschoben und in ihrer aufgeschobenen Endlage axial gesichert ist.

6. Bohrfutter nach einem der Ansprüche 2 bis 5, dadurch gekennzeichnet, daß der Zwischenring (18) eine kreisringförmige Außenschulter (62) aufweist, der die Spannhülse (9) zur axialen Abstützung nach hinten mit einer entsprechend kreisringförmigen Innenschulter (63) anliegt.

7. Bohrfutter nach einem der Ansprüche 1 bis 6, dadurch gekennzeichnet, daß die Spannhülse (9) im Bereich axial hinter dem Spannring (8) durch einen mit dem Futterkörper (1) verbundenen Abschlußring (40) geführt ist.

8. Bohrfutter nach Anspruch 7, dadurch gekennzeichnet, daß der Abschlußring (40) drehfest am Futterkörper (1) befestigt und als Haltering zum Festhalten des Futterkörpers von Hand ausgebildet ist.

9. Bohrfutter nach Anspruch 7 oder 8, dadurch gekennzeichnet, daß die Spannhülse (9) am Abschlußring (40) gegen Verschiebungen axial nach vorn und/oder hinten gesichert ist.

10. Bohrfutter nach einem der Ansprüche 1 bis 9, dadurch gekennzeichnet, daß zwischen der Spannhülse (9) und dem Futterkörper (1) ein mit beiden axial im Anschlag stehender Sprengring (41) vorgesehen ist, der die Spannhülse (9) gegen Verschieben axial nach vorn und/oder hinten sichert.

11. Bohrfutter nach einem der Ansprüche 1 bis 10, dadurch gekennzeichnet, daß axial vor der Spannhülse (9) ein ihr gegenüber frei verdrehbarer Anschlagring (50) vorgesehen ist, der am Futterkörper (1) axial unverschiebbar und drehbar gelagert ist.

12. Bohrfutter nach einem der Ansprüche 1 bis 11, dadurch gekennzeichnet, daß die Spannhülse (9) in radialer Richtung zweiwandig aus einer inneren Kunststoffhülse (9') und einer äußeren Mantelhülse (9") aus festerem Werkstoff, insbesondere Stahl, zusammengesetzt ist und beide Hülsen (9', 9'') relativ zueinander gegen Verdrehen gesichert sind.

13. Bohrfutter nach einem der Ansprüche 2 bis 12, dadurch gekennzeichnet, daß für die Anschläge (16', 16") zwischen der Spannhülse (9) und dem Zwischenring (18) mindestens ein Anschlagstück (29) am einen Teil, d. h. Zwischenring (18) oder Spannhülse (9), und eine das Anschlagstück (29) aufnehmende Aussparung (30) am anderen Teil vorgesehen sind, wobei das Anschlagstück (29) an den Enden des Drehwegs jeweils mit einer der die Aussparung (30) in Umfangsrichtung begrenzenden beiden Stirnflächen zum Anschlag kommt.

14. Bohrfutter nach Anspruch 13, dadurch gekennzeichnet, daß das Anschlagstück (29) als Wandstück des Zwischenrings (18) ausgebildet ist, das vom vorderen Rand des Zwischenrings axial nach vorn in die auf der Wandinnenseite der Spannhülse (9) ausgebildete Aussparung (30) vorsteht.

15. Bohrfutter nach Anspruch 14, dadurch gekennzeichnet, daß das Anschlagstück (29) die Aussparung (30) axial bis zum vorderen Rand der Spannhülse (9) durchgreift sowie an seinem vorderen Ende für die Spannhülse (9) einen axialen Anschlag (65) bildet, der die Spannhülse (9) gegen Verschieben axial nach vorn sichert.

16. Bohrfutter nach Anspruch 13, dadurch gekennzeichnt, daß das Anschlagstück (29) als radial einwärts gerichteter Nocken an der Wandinnenseite der Spannhülse (9) und die Aussparung (30) als Fenster in einem sich axial nach vorn etwa konisch verjüngenden Kragen (66) des Zwischenrings (18) ausgebildet ist, und daß der Nocken eine radial federnde Rastnase (67) aufweist, die bei auf den Zwischenring (18) vollständig aufgeschobener Spannhülse (9) hinter dem axial vorderen Rand (68) des Fensters einrastet und dadurch die Spannhülse (9) gegen Verschieben axial nach vorn sichert.

17. Bohrfutter nach einem der Ansprüche 2 bis 16, dadurch gekennzeichnet, daß der Kranz der Sperrausnehmungen (10) am Futterkörper (1) und das Sperrglied am Zwischenring (18) angeordnet sind, und daß zur Steuerung des Sperrglieds (12) an der Spannhülse (9) eine Steuerkurve (35) ausgebildet ist.

18. Bohrfutter nach einem der Ansprüche 2 bis 17, dadurch gekennzeichnet, daß die Rasteinrichtung (17) von in den Raststellungen miteinander zum Eingriff kommenden Rastelementen, d. h. Rastvorsprung (38") oder Rastaufnahme (17"), am Zwischenring (18) und an der Spannhülse (9) gebildet ist, und daß der Zwischenring (18) mindestns einen sich in Umfangsrichtung erstreckenden Federsteg (34) trägt, an dem sich mindestens eines der Rastelemente befindet.

19. Bohrfutter nach Anspruch 17, dadurch gekennzeichnet, daß das Sperrglied (12) an einem sich in Umfangsrichtung erstreckenden Federarm (36) des Zwischenrings (18) ausgebildet ist, wobei der Federarm (36) im eingerückten Zustand des Sperrglieds (12) der Steuerkurve (35) in einem Abstand vom Sperrglied (12) anliegt, der das Durchfedern des Federarms (36) an der Stelle des Sperrglieds (12) um dessen Eingriffstiefe in die Sperrausnehmungen (10) ermöglicht.

20. Bohrfutter nach den Ansprüchen 18 und 19, dadurch gekennzeichnet, daß der Federsteg (34) und der Federarm (36) von einem Federband (38) gebildet sind, an dem zwei in Umfangsrichtung in gegenseitigem Abstand befindliche Vorsprünge (38', 38") vorgesehen sind, von denen der sperrgliedseitige Vorsprung (38') die Anlage des Federarms (36) an der Steuerkurve (35), der andere Vorsprung (38") den Rastvorsprung der Rasteinrichtung (17) bildet, deren Rastaufnahmen (17'') an der Spannhülse (9) ausgebildet sind.

21. Bohrfutter nach Anspruch 20, dadurch gekennzeichnet, daß das Sperrglied (12) unmittelbar durch das rückwärtige Ende des Federbandes (38) gebildet ist, gesehen in der dem Schließen des Bohrfutters entsprechenden Drehrichtung der Spannhülse (9).

22. Bohrfutter nach Anspruch 20 oder 21, dadurch gekennzeichnet, daß das Federband (38) bei zur Futterachse (3) paralleler Ausrichtung seiner Bandfläche in den Zwischenring (18) mit auswärts gerichteter Vorspannung eingelegt ist, mit seinen Vorsprüngen (38', 38") den Zwischenring (18) in Fenstern (39', 39") nach außen durchgreift, wodurch das Federband (38) gegen Verdrehen am Zwischenring (18) gesichert ist, und daß das Federband (38) in Umfangsrichtung zwischen seinen Vorsprüngen (38', 38") einen dritten, den Zwischenring (18) in einem weiteren Fenster (39''') nach außen durchgreifenden Vorsprung (38''') aufweist, der in eine auf der Wandinnenseite der Spannhülse (9) vorgesehene Nut (70) greift, die sich in Umfangsrichtung mindestens über den maximal möglichen Verdrehungsweg der Spannhülse (9) gegenüber dem Zwischenring (18) erstreckt und mit mindestens einer ihrer Seitenwände eine axiale Anlage für den Vorsprung (38''') bildet, durch welche die Spannhülse (9) gegen Axialverschiebung am Zwischenring (18) gesichert ist.

23. Bohrfutter nach Anspruch 22, dadurch gekennzeichnet, daß der mittlere Vorsprung (38''') mit den benachbarten Vorsprüngen (38', 38") durch je einen eigenen Federsteg (34) verbunden ist, und daß der den Rastvorsprung bildende Vorsprung (38") auf seiner dem mittleren Vorsprung (38''') abgewandten Seite einen dem Kranz der Sperrausnehmungen (10) unter Vorspannung anliegenden Federschenkel (71) trägt.

24. Bohrfutter nach einem der Ansprüche 22 und 23, dadurch gekennzeichnet, daß der Zwischenring (18) an einer in Umfangsrichtung zwischen den Vorsprüngen (38', 38") und gegenüber dem Federband (38) liegenden Stelle eine vom Federband unabhängige Federspange (72) aufweist, die radial nach außen in eine auf der Wandinnenseite der Spannhülse (9) vorgesehene Nut (73) greift, die sich in Umfangsrichtung mindestens über den maximal möglichen Verdrehungsweg der Spannhülse (9) gegenüber dem Zwischenring (18) erstreckt und mit mindestens einer ihrer Seitenwände eine axiale Anlage für die Federspange (72) bildet, durch welche die Spannhülse (9) gegen Axialverschiebung am Zwischenring (18) gesichert ist.

## Claims

1. A drilling chuck, in particular for hammer drilling, comprising a chuck body (1) which can be connected to a drilling spindle, clamping jaws (5) which are guided in the chuck body and which form between them a receiving means (4) for the drilling tool and which for opening and closing of the drilling chuck are in engagement by way of a tooth arrangement (6) with the clamping screwthread (7) of a clamping ring (8) which is guided on the chuck body (1) rotatably and axially immovably, for the actuation of which there is a coaxial and also axially immovable clamping sleeve (9), a locking device (11) for the clamping ring (8) comprising a coaxial ring of locking recesses (10) and at least one locking member (12) which is engaged into the locking recesses (10) under spring force, wherein the locking member (12) and the locking recesses (10) bear against each other at flank surfaces (13', 13") which are inclined in such a way that they lock the clamping ring (8) to prevent rotation thereof in the direction of rotation corresponding to opening of the drilling chuck but upon rotation of the clamping ring (8) in the opposite direction of rotation which therefore corresponds to closing of the drilling chuck they urge the locking member (12) out of the locking recesses (10) against the spring force and thereby allow the locking member to slip from one locking recess to another, and wherein the locking member (12) is displaceable between the condition of being engaged at the locking recesses (12) and a condition of being disengaged from the locking recesses (10), characterised in that the clamping sleeve (9) is rotatable relative to the clamping ring (8) and there are provided abutments (16', 16") which limit the rotation of the clamping sleeve (9) relative to the clamping ring (8) in both directions of rotation, that the locking device is provided between the clamping ring (8) and the chuck body (1) and the locking member (12) is displaceable by rotation of the clamping sleeve (9) relative to the clamping ring (8) between the condition of being engaged at the locking recesses (10) and the disengaged condition, wherein by virtue of rotation of the clamping sleeve (9) in the direction of rotation corresponding to closing of the drilling chuck the locking member (12) is displaced from the disengaged condition into the engaged condition and vice-versa, that moreover provided between the clamping sleeve (9) and the clamping ring (8) is a detent device (17) which has two detent positions in the peripheral direction, wherein in the one detent position the locking member (12) is in the condition of being engaged at the locking recesses (10) and in the other detent position the locking member is in the disengaged condition, and that the clamping sleeve (9) embraces the clamping ring (8) and covers it in the axial direction over its entire length and is guided in the region axially in front of the clamping screwthread (7) only at the clamping ring (8).

2. A drilling chuck according to claim 1 characterised in that the clamping ring (8) has a coaxial intermediate ring (18) which forms a guide for the clamping sleeve (9) and which carries the parts, which are at the clamping ring side, of the abutments (16', 16") for the clamping sleeve (9), the locking device (10, 12) and the detent device (17) and has a collar portion (18') which non-rotatably encloses the part of the clamping ring (8) carrying the clamping screwthread (7').

3. A drilling chuck according to claim 2 characterised in that the part of the clamping ring (8) which carries the clamping screwthread (7) comprises two ring halves which are held together by the collar portion (18') on the chuck body.

4. A drilling chuck according to claim 2 or claim 3 characterised in that for radial guidance of the clamping sleeve (9) the intermediate ring (18) has a rotationally symmetrical outside surface (60) against which the clamping sleeve (9) bears with a correspondingly rotationally symmetrical inside surface (61).

5. A drilling chuck according to claim 4 characterised in that the rotationally symmetrical inside surface (61) of the clamping sleeve (9) in its entire axial region between its rearward sleeve end and the clamping ring (8) is of an inside diameter which is at least equal to its inside diameter at the clamping ring (8) and that the clamping sleeve (9) which is undivided in the axial direction is axially pushed from the front over the chuck body (1) on to the clamping ring (8) which is in a finished mounted condition on the chuck body and is axially secured in its limit position of being pushed on to the clamping ring.

6. A drilling chuck according to one of claims 2 to 5 characterised in that the intermediate ring (18) has an external shoulder (62) in the form of a circular ring against which the clamping sleeve (9) bears for axial support rearwardly with an internal shoulder (63) which is correspondingly in the form of a circular ring.

7. A drilling chuck according to one of claims 1 to 6 characterised in that in the region axially behind the clamping ring (8) the clamping sleeve (9) is guided by a closure ring (40) connected to the chuck body (1).

8. A drilling chuck according to claim 7 characterised in that the closure ring (40) is non-rotatably secured to the chuck body (1) and is in the form of a holding ring for holding the chuck body fast by hand.

9. A drilling chuck according to claim 7 or claim 8 characterised in that the clamping sleeve (9) is secured to the closure ring (40) to prevent displacements axially forwardly and/or rearwardly.

10. A drilling chuck according to one of claims 1 to 9 characterised in that provided between the clamping sleeve (9) and the chuck body (1) is a circlip (41) which is axially in abutment with both and which secures the clamping sleeve (9) to prevent displacement axially forwardly and/or rearwardly.

11. A drilling chuck according to one of claims 1 to 10 characterised in that provided axially in front of the clamping sleeve (9) is an abutment ring (50) which is freely rotatable with respect thereto and which is axially immovably and rotatably mounted on the chuck body (1).

12. A drilling chuck according to one of claims 1 to 11 characterised in that the clamping sleeve (9) is composed of a two-wall structure in the radial direction comprising an inner plastic sleeve (9') and an outer casing sleeve (9") of stronger material, in particular steel, and the two sleeves (9', 9") are prevented from rotating relative to each other.

13. A drilling chuck according to one of claims 2 to 12 characterised in that for the abutments (16', 16") between the clamping sleeve (9) and the intermediate ring (18) there is provided at least one abutment portion (29) on the one part, that is to say the intermediate ring (18) or the clamping sleeve (9), and a recess (30) for receiving the abutment portion (29) on the other part, wherein the abutment portion (29) comes into abutment at the ends of the rotational travel with a respective one of the two end faces defining the recess (30) in the peripheral direction.

14. A drilling chuck according to claim 13 characterised in that the abutment portion (29) is in the form of a wall portion of the intermediate ring (18) which projects from the front edge of the intermediate ring axially forwardly into the recess (30) on the inside of the wall of the clamping sleeve (9).

15. A drilling chuck according to claim 14 characterised in that the abutment portion (29) extends through the recess (30) axially to the front edge of the clamping sleeve (9) and at its front end forms for the clamping sleeve (9) an axial abutment (65) which secures the clamping sleeve (9) against displacement in an axially forward direction.

16. A drilling chuck according to claim 13 characterised in that the abutment portion (29) is in the form of a radially inwardly directed projection at the inside of the wall of the clamping sleeve (9) and the recess (30) is in the form of a window in an axially forwardly approximately conically tapering collar (66) of the intermediate ring (18), and that the projection has a radially resilient detent nose (67) which when the clamping sleeve (9) is completely pushed on to the intermediate ring (18) engages behind the axially front edge (68) of the window and thereby secures the clamping sleeve (9) against displacement axially forwardly.

17. A drilling chuck according to one of claims 2 to 16 characterised in that the ring of locking recesses (10) is arranged on the chuck body (1) and the locking member is arranged on the intermediate ring (18) and that to control the locking member (12) a control cam (35) is provided on the clamping sleeve (9).

18. A drilling chuck according to one of claims 2 to 17 characterised in that the detent device (17) is formed by detent elements which come into engagement with each other in the detent positions, that is to say the detent projection (38") or the detent receiving means (17"), on the intermediate ring (18) and on the clamping sleeve (9), and that the intermediate ring (18) carries at least one spring limb (34) which extends in the peripheral direction and on which at least one of the detent elements is disposed.

19. A drilling chuck according to claim 17 characterised in that the locking member (12) is provided on a spring arm (36) which extends in the peripheral direction of the intermediate ring (18), wherein in the engaged condition of the locking member (12) the spring arm (36) bears against the control projection (35) at a spacing from the locking member (12), which permits the spring arm (35) at the location of the locking member (12) to flex by the depth of engagement of the locking member into the locking recesses (10).

20. A drilling chuck according to claims 18 and 19 characterised in that the spring limb (34) and the spring arm (36) are formed by a spring band on which there are provided two projections (38', 38") which are disposed at a mutual spacing in the peripheral direction and of which the projection (38') at the locking member side forms the support for the spring arm (36) at the control cam (35), and the other projection (38") forms the detent projection of the detent device (17) whose detent receiving means (17") are provided on the clamping sleeve (9).

21. A drilling chuck according to claim 20 characterised in that the locking member (12) is formed directly by the rearward end of the spring band (38), viewed in the direction of rotation of the clamping sleeve (9), which corresponds to closing of the drilling chuck.

22. A drilling chuck according to claim 20 or claim 21 characterised in that, when the surface of the spring band (38) is oriented in parallel relationship with the axis (3) of the chuck, the spring band (38) is inserted into the intermediate ring (18) with an outwardly directed bias, it engages outwardly with its projections (38', 38") through the intermediate ring (18) in windows (39', 39"), whereby the spring band (38) is secured against rotation on the intermediate ring (18), and that in the peripheral direction between its projections (38', 38") the spring band (38) has a third projection (38"') which engages outwardly through the intermediate ring (18) in a further window (39"') and which engages into a groove (70) which is provided on the inside of the wall of the clamping sleeve (9) and which extends in the peripheral direction at least over the maximum possible rotational travel of the clamping sleeve (9) with respect to the intermediate ring (18) and which with at least one of its side walls forms an axial support for the projection (38"'), by which the clamping sleeve (9) is secured against axial displacement on the intermediate ring (18).

23. A drilling chuck according to claim 22 characterised in that the central projection (38"') is connected to the adjacent projections (38', 38") by a respective specific spring limb (34) and that the projection (38") forming the detent projection, on its side remote from the central projection (38"'), carries a spring leg (71) which bears against the ring of locking recesses (10) under a bias.

24. A drilling chuck according to one of claims 22 and 23 characterised in that at a location which is disposed in the peripheral direction between the projections (38', 38") and opposite the spring band (38), the intermediate ring (18) has a spring clasp (72) which is independent of the spring band and which engages radially outwardly into a groove (73) which is provided on the inside of the wall of the clamping sleeve (9) and which extends in the peripheral direction at least over the maximum possible rotational travel of the clamping sleeve (9) with respect to the intermediate ring (18) and forms with at least one of its side walls an axial support for the spring clasp (72) by which the clamping sleeve (9) is prevented from axial displacement on the intermediate ring (18).

## Revendications

1. Mandrin porte-foret, en particulier pour le perçage à percussion, comprenant un corps de mandrin ( 1 ) qui peut être fixé à une broche de perçage, des mors de serrage (5) guidés dans le corps de mandrin, qui définissent entre eux un logement (4) pour l'outil de perçage et qui, pour ouvrir et fermer le mandrin de perçage, sont en prise par l'intermédiaire d'une denture (6) avec le filetage de serrage (7) d'une bague de serrage (8) guidée en rotation sur le corps de mandrin, mais fixe dans la direction axiale, pour l'actionnement de laquelle il est prévu un manchon de serrage (9) coaxial, également fixe dans la direction axiale, un dispositif de verrouillage (11) pour la bague de serrage (8) comportant une couronne coaxiale de cavités de verrouillage (10) et au moins un organe de verrouillage (12) qui est poussé dans les cavités de verrouillage (10) par la force d'un ressort de verrouillage, l'organe de verrouillage (12) et les cavités de verrouillage (10) étant en contact réciproque par des surfaces de flancs (13', 13") inclinées, de manière telle qu'elles empêchent la rotation de la bague de serrage (8) dans la direction de rotation correspondant à l'ouverture du mandrin porte-foret et permettent, lors de la rotation de la bague de serrage (8) dans la direction opposée, c'est-à-dire dans la direction de rotation correspondant à la fermeture du mandrin porte-foret, à l'organe de verrouillage (12) de sortir des cavités de verrouillage (10) à l'encontre de la force du ressort de verrouillage et ainsi de glisser de cavité de verrouillage en cavité de verrouillage, l'organe de verrouillage (12) pouvant être amené de l'état enclenché dans les cavités de verrouillage (10) dans un état dégagé des cavités de verrouillage (10). caractérisé en ce que le manchon de serrage (9) pour tourner par rapport à la bague de serrage (8) et qu'il est prévu des butées (16', 16") qui limitent la rotation du manchon de serrage (9) par rapport à la bague de serrage (8) dans les deux directions, en ce que le dispositif de verrouillage est agencé entre la bague de serrage (8) et le corps de mandrin (1) et que l'organe de verrouillage, par rotation du manchon de serrage (9) par rapport à la bague de serrage (8), peut être amené de l'état enclenché dans les cavités de verrouillage (10) dans un état dégagé des cavités de verrouillage, l'organe de verrouillage (12), lors de la rotation du manchon de serrage (9) dans la direction de rotation qui correspond à la fermeture du mandrin porte-foret, passant de l'état enclenché à l'état dégagé et inversement, en ce qu'il est prévu, entre le manchon de serrage (9) et la bague de serrage (8), un dispositif d'encliquetage (17) qui présente deux positions d'encliquetage dans la direction périphérique, l'organe de verrouillage (12), dans l'une des positions d'encliquetage, se trouvant dans l'état enclenché dans les cavités de verrouillage (10) et, dans l'autre position d'encliquetage, se trouvant dans l'état dégagé desdites cavités de verrouillage, et en ce que le manchon de serrage (9) entoure la bague de serrage (8) et couvre celle-ci sur toute sa longueur axiale et est guidé, dans la région antérieure au filetage de serrage (7) vu dans la direction axiale, uniquement sur le la bague de serrage (8).

2. Mandrin de perçage selon la revendication 1, caractérisé en ce que, la bague de serrage (8) comporte une bague intermédiaire (18) coaxiale formant moyen de guidage pour le manchon de serrage (9), qui porte les parties côté bague de serrage des butées (16', 16") pour le manchon de serrage (9), du dispositif de verrouillage (10, 12) et du dispositif d'encliquetage (17) et comprend une partie formant collet (18') qui entoure de manière fixe en rotation la partie de la bague de serrage (8) portant le filetage de serrage (7)

3. Mandrin de perçage selon la revendication 2, caractérisé en ce que la partie de la bague de serrage (8) portant le filetage de serrage (7) est formée de deux demi-bagues qui sont tenues sur le corps de mandrin (1) par la partie formant collet (18') de la bague intermédiaire (18).

4. Mandrin de perçage selon la revendication 2 ou 3, caractérisé en ce que la bague intermédiaire (18), pour le guidage radial du manchon de serrage (9), comporte une surface extérieure (60) symétrique de révolution, sur laquelle le manchon de serrage (9) prend appui par une surface intérieure (61) correspondante, symétrique de révolution.

5. Mandrin de perçage selon la revendication 4, caractérisé en ce que la surface intérieure (61) du manchon de serrage (9), sur l'ensemble de la portion axiale entre l'extrémité arrière du manchon et la bague de serrage (8), a un diamètre intérieur libre qui est au moins égal à son diamètre intérieur au niveau de la bague de serrage (8) et en ce que le manchon de serrage (9), réalisé d'une seule pièce dans la direction axiale, est enfilé par l'avant sur la bague de serrage (8) préalablement montée sur le corps de mandrin (1), puis bloquée axialement dans la position finale de montage .

6. Mandrin de perçage selon une des revendications 2 à 5, caractérisé en ce que la bague intermédiaire (18), pour le guidage radial du manchon de serrage (9), comporte un épaulement extérieur (62) annulaire, sur lequel le manchon de serrage (9) prend appui par un épaulement intérieur (63) annulaire adapté, à des fins d'appui axial arrière.

7. Mandrin de perçage selon une des revendications 1 à 6, caractérisé en ce que dans la région située derrière la bague de serrage (8), le manchon de serrage (9) est guidé par une bague de fermeture (40) liée au corps de mandrin (1).

8. Mandrin de perçage selon la revendication 7, caractérisé en ce que la bague de fermeture est solidaire en rotation du corps de mandrin (1) et est conformée en bague de préhension pour saisir le corps de mandrin dans la main.

9. Mandrin de perçage selon la revendication 7 ou 8, caractérisé en ce que le manchon de serrage (9) est lié à la bague de fermeture (40) aux fins d'empêcher les déplacements axiaux vers l'avant et/ou ver l'arrière.

10. Mandrin de perçage selon une des revendications 1 à 9, caractérisé en ce qu'il est prévu entre le manchon de serrage (9) et le corps de mandrin (1) un anneau élastique (41) qui est en butée axialement avec les deux éléments et empêche les déplacements axiaux du manchon de serrage (9) vers l'avant et/ou vers l'arrière.

11. Mandrin de perçage selon une des revendications 1 à 10, caractérisé en ce qu'il est prévu, devant le manchon de serrage (9) dans la direction axiale, une bague de butée (50) qui tourne librement par rapport à celui-ci et est montée fixe dans la direction axiale et tournante sur le corps de mandrin (1).

12. Mandrin de perçage selon une des revendications 1 à 11, caractérisé en ce que le manchon de serrage (9), dans la direction radiale, comporte une double paroi avec un manchon intérieur (9') en matière plastique et un manchon extérieur (9") en un matériau plus résistant, en particulier en acier, et que les deux manchons (9', 9") sont immobilisés en rotation l'un par rapport à l'autre.

13. Mandrin de perçage selon une des revendications 2 à 12, caractérisé en ce que pour les butées (16', 16") entre le manchon de serrage (9) et la bague intermédiaire (18), il est prévu au moins une pièce de butée (29) sur un élément, c'est-à-dire sur la bague intermédiaire (18) ou le manchon de serrage (9), et un évidement (30) qui reçoit la pièce de butée (29) sur l'autre élément, la pièce de butée (29), aux extrémités de la course de rotation, venant en butée sur une des deux surfaces frontales qui délimitent l'évidement (30) dans la direction périphérique.

14. Mandrin de perçage selon la revendication 13, caractérisé en ce que la pièce de butée (29) est conformée en élément de paroi de la bague intermédiaire (18) qui, à partir du bord antérieur de la bague intermédiaire, fait saillie axialement vers l'avant dans l'évidement (30) aménagé dans la paroi intérieure du manchon de serrage (9).

15. Mandrin de perçage selon la revendication 14, caractérisé en ce que la pièce de butée (29) traverse axialement l'évidement (30) jusqu'au bord antérieur du manchon de serrage (9) et forme à son extrémité antérieure une butée axiale (65) pour la manchon de serrage (9), qui empêche le déplacement dudit manchon de serrage (9) axialement vers l'avant.

16. Mandrin de perçage selon la revendication 13, caractérisé en ce que la pièce de butée (29) est conformée en came dirigée radialement vers l'intérieur sur la paroi intérieure du manchon de serrage (9) et l'évidement (30) est conformé en fenêtre aménagée dans un collet (66) de la bague intermédiaire (18), qui se rétrécit sensiblement en cône vers l'avant vu dans la direction axiale, et en ce que la came comporte un nez d'encliquetage (67) élastique dans la direction radiale qui, lorsque le manchon de serrage (9) est complètement enfilé sur la bague intermédiaire (18), s'encliquète derrière le bord (68) antérieur, vu dans la direction axiale, de la fenêtre et ainsi empêche le déplacement axial vers l'avant du manchon de serrage (9).

17. Mandrin de perçage selon une des revendications 2 à 16, caractérisé en ce que la couronne des cavités de verrouillage (10) est disposée sur le corps de mandrin (1) et l'organe de verrouillage est disposé sur la bague intermédiaire (18) et en ce qu'il est prévu pour commander l'organe de verrouillage (12), une came de commande (35) sur le manchon de serrage (9).

18. Mandrin de perçage selon une des revendications 2 à 17, caractérisé en ce que le dispositif d'encliquetage (17) est formé d'éléments d'encliquetage, c'est-à-dire d'une saillie d'encliquetage (38") ou d'une cavité d'encliquetage (17") sur la bague intermédiaire (18) et sur le manchon de serrage (9), qui sont en prise mutuelle et en ce que la bague intermédiaire comporte au moins une barrette élastique (34) qui s'étend dans la direction périphérique sur laquelle est aménagé au moins un des éléments d'encliquetage.

19. Mandrin de perçage selon la revendication 17, caractérisé en ce que l'organe de verrouillage (12) est aménagé sur un bras de ressort (36) de la bague intermédiaire (18) qui s'étend dans la direction périphérique. le bras de ressort (36), dans l'état enclenché de l'organe de verrouillage (12), reposant sur la came de commande (35) à une distance de l'organe ne de verrouillage (12) qui permet la flexion élastique du bras de ressort (36) au niveau de l'organe de verrouillage (12), de la profondeur de pénétration de celui-ci dans les cavités de verrouillage (10).

20. Mandrin de perçage selon les revendications 18 et 19, caractérisé en ce que la barrette élastique (34) et le bras de ressort (36) sont formés d'une lame à ressort (38) sur laquelle sont prévues deux saillies (38', 38") mutuellement espacées dans la direction périphérique, parmi lesquelles la saillie (38') forme l'appui du bras de ressort (36) sur la came de commande (35) et l'autre saillie (38") forme la saillie d'encliquetage du dispositif d'encliquetage (17), dont les cavités d'encliquetage (17") sont aménagées sur le manchon de serrage (9).

21. Mandrin de perçage selon la revendication 20, caractérisé en ce que l'organe de verrouillage (12) est formé directement par l'extrémité arrière de la lame à ressort (38), vu dans la direction de rotation du manchon de serrage (9) correspondant à la fermeture du mandrin.

22. Mandrin de perçage selon la revendication 20 ou 21, caractérisé en ce que la lame à ressort (38), sa surface de bande étant orientée parallèlement à l'axe de mandrin (3), est montée précontrainte en direction de l'extérieur dans la bague intermédiaire (18), traverse avec ses saillies (38', 38") la bague intermédiaire (18) en direction de l'extérieur à travers des fenêtres (39', 39"), la bande à ressort (38) étant immobilisée en rotation sur la bague intermédiaire (18) et en ce que la lame à ressort (38) comporte dans la direction périphérique, entre ses saillies (38', 38") une troisième saillie (38"') qui traverse la bague intermédiaire (18) en direction de l'extérieur par une fenêtre (39"') supplémentaire et s'engage dans une rainure (70) aménagée dans la paroi intérieure du manchon de serrage (9), laquelle rainure, dans la direction périphérique, s'étend sur la course de rotation maximale possible du manchon de serrage (9) par rapport à la bague intermédiaire (18) et forme avec au moins une de ses parois latérales une butée axiale pour la saillie (38"'), la bague de commande (9) étant ainsi tenue axialement sur la bague de serrage (8).

23. Mandrin de perçage selon la revendication 22, caractérisé en ce que la saillie intermédiaire (38"') est liée aux saillies voisines (38', 38") par une barrette de ressort (34) chaque fois et en ce que la saillie (38") qui constitue la saillie d'encliquetage, du côté éloigné de la saillie intermédiaire (38"'), comporte une branche de ressort (71) qui est appliquée avec précontrainte sur la couronne de cavités de verrouillage (10).

24. Mandrin de perçage selon une des revendications 22 et 23, caractérisé en ce que la bague intermédiaire (18), en un point qui, dans la direction périphérique, est situé entre les saillies (38', 38") et en vis -à-vis de la lame à ressort (38), comporte une agrafe élastique (72) indépendante de la lame à ressort, qui radialement vers l'extérieur, s'engage dans une gorge (73) aménagée dans la paroi intérieure du manchon de serrage (9), gorge qui, dans la direction périphérique, s'étend au moins sur la course de rotation maximale possible du manchon de serrage (9) par rapport à la bague de serrage (8) et forme avec au moins une de ses parois latérales une butée axiale pour l'agrafe élastique (72), grâce à laquelle le manchon de serrage (9) est tenu axialement sur la bague intermédiaire (18).
